(19) Europäisches Patentamt
European Patent Office
Office européen des brevets

(11) EP 3 950 892 A1

(12) **EUROPEAN PATENT APPLICATION**
published in accordance with Art. 153(4) EPC

(43) Date of publication:
**09.02.2022 Bulletin 2022/06**

(21) Application number: **19920779.6**

(22) Date of filing: **26.03.2019**

(51) International Patent Classification (IPC):
***C10M 107/02*** *(2006.01)* ***C08F 4/6592*** *(2006.01)*
***C10N 50/10*** *(2006.01)*

(52) Cooperative Patent Classification (CPC):
**C08F 4/6592; C10M 107/02**

(86) International application number:
**PCT/JP2019/013005**

(87) International publication number:
**WO 2020/194550 (01.10.2020 Gazette 2020/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Mitsui Chemicals, Inc.**
**Tokyo 105-7122 (JP)**

(72) Inventor: **ABE Shota**
**Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

(54) **GREASE COMPOSITION AND METHOD FOR PRODUCING SAME**

(57) [Object]

To provide a grease composition having extremely excellent oil film formation properties at high temperatures and low-torque properties at low temperatures with balance, and further having excellent thermal and oxidation stability.

[Solution]

A grease composition including 10 to 98% by mass of a lubricant base oil (A) having a kinematic viscosity at 100°C of 1 to 14 $mm^2/s$ , a viscosity index of 100 or more, and a pour point of 0°C or lower, 89 to 1% by mass of a liquid random copolymer (B) of ethylene and α-olefin produced by using a specific catalyst, and 1 to 30% by mass of a thickener (C) (note that the sum total of (A) to (C) is 100% by mass), wherein the lubricant base oil (A) and the copolymer (B) are mixed in such a ratio that the mixture of the lubricant base oil (A) and the ethylene-α-olefin copolymer (B) has a kinematic viscosity at 100°C of 1 to 500 $mm^2/s$ and a viscosity index of 120 or more.

EP 3 950 892 A1

## Description

### Technical Field

The present invention relates to a grease composition and a method for producing the same, and more specifically, it relates to a grease composition that is suitable for grease used in such as automobile parts and a method for producing the same.

### Background Art

As downsizing and weight saving, and expansion of the cabin in automobiles (cars) are desired, scale-down of the engine room is unavoidable. Thus, further downsizing and weight saving of various parts that are mounted in the engine room is in progress. With regard also to electronically-controlled motors of automobiles such as bearings for electronically-controlled throttles, idle speed control valves (ISCV), and exhaust gas recirculation (EGR), heating-up due to speeding up by downsizing and weight saving of gears and bearings and tightly-closed engine room becomes problems. Also, for reducing energy loss upon starting operation and operability under extremely low temperature, low torque is required when it is under low temperature below -20°C.

Grease is used as a lubricant composition that is used at slide portions of such gears and bearings. Enhanced durability due to exposure to high temperature in the used environment and an enhanced low-temperature property are also demanded for such grease.

In order to enhance the low-temperature property of grease, decreasing viscosity of the base oil is usually performed. However, because the viscosity at high temperatures also decreases due to decrease of the viscosity of the base oil, formation of oil films at high temperatures becomes difficult, resulting in that heat resistance is impaired. In order to cope with both low torque at low temperatures and oil film-formation at high temperatures, it has been investigated to use synthetic oils (such as poly $\alpha$-olefins and ethylene-$\alpha$-olefin copolymers) that have excellent temperature-viscosity properties instead of mineral oils that have been conventionally used. However, there is still room for investigation (Patent Literatures 1 to 3).

Patent Literature 4 discloses a grease composition containing a specific lubricant base oil, a specific ethylene-$\alpha$-olefin copolymer and a thickener, which copes with these both properties.

Moreover, Patent Literature 5 describes a method for producing a liquid random copolymer of ethylene and $\alpha$-olefin, wherein further described is that this copolymer is useful as a lubricating oil.

### Citation List

### Patent Literature

Patent Literature 1: JP H01-308497 A
Patent Literature 2: JP 2002-249794 A
Patent Literature 3: JP 2005-54156 A
Patent Literature 4: JP 2016-69409 A
Patent Literature 5: EP 2921509 A1

### Summary of Invention

### Technical Problem

However, there was further room for improvement in the conventional grease compositions from the perspective of providing a grease composition that has extremely excellent oil film-formation properties at high temperatures and the low-torque properties at low temperatures with balance, and that also has excellent thermal and oxidation stability.

### Solution to Problem

The present inventors keenly investigated the development of a grease composition having excellent performance, and as a result, found that the aforementioned problems can be solved with a grease composition which contains, with a specific lubricant base oil, an ethylene-$\alpha$-olefin (co)polymers prepared by means of a specific catalyst and a thickener, and satisfies specific conditions , thus arriving at the perfection of the present invention. The present invention

specifically includes the below aspects.

[1]

A grease composition comprising 10 to 98% by mass of lubricant base oil (A) having the properties of the below (A1) to (A3), 89 to 1% by mass of a liquid random copolymer (B) of ethylene and $\alpha$-olefin(s) produced by the method ($\alpha$) below, and 1 to 30% by mass of a thickener (C) (note that the sum total of the lubricant base oil (A), the copolymer (B) and the thickener (C) is 100% by mass), the lubricant base oil (A) and the liquid random copolymer (B) being mixed in such a ratio that the mixture of the lubricant base oil (A) and the liquid random copolymer (B) has the properties of (D1) to (D2) below:

(A1) The lubricant base oil has a kinematic viscosity at 100°C of 1 to 14 $mm^2/s$
(A2) The lubricant base oil has a viscosity index of 100 or more
(A3) The lubricant base oil has a pour point of 0°C or lower (D1) The mixture has a kinematic viscosity at 100°C of 1 to 500 $mm^2/s$
(D2) The mixture has a viscosity index of 120 or more (Method ($\alpha$))

A method ($\alpha$) for preparing a liquid random copolymer of ethylene and $\alpha$-olefin, comprising a step of carrying out solution polymerization of ethylene and $\alpha$-olefin having 3 to 20 carbon atoms, under a catalyst system comprising

(a) a bridged metallocene compound represented by the following Formula, 1 and
(b) at least one compound selected from a group consisting of

(i) an organoaluminum oxy-compound, and
(ii) a compound which reacts with the bridged metallocene compound to form an ion pair.

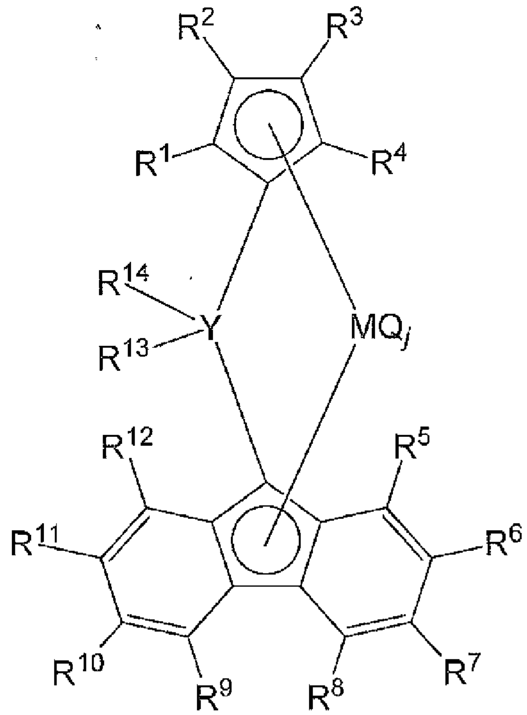

··· (Formula 1)

[In Formula 1, $R^1$, $R^2$, $R^3$, $R^4$, $R^5$, $R^8$, $R^9$ and $R^{12}$ are respectively and independently hydrogen atom, hydrocarbon group or silicon-containing hydrocarbon group, and adjoining groups are optionally connected to each other to form a ring structure,

$R^6$ and $R^{11}$, being the same, are hydrogen atom, hydrocarbon group or silicon-containing hydrocarbon group,
$R^7$ and $R^{10}$, being the same, are hydrogen atom, hydrocarbon group or silicon-containing hydrocarbon group,
$R^6$ and $R^7$ are optionally connected to hydrocarbon having 2 to 3 carbon atoms to form a ring structure,
$R^{11}$ and $R^{10}$ are optionally connected to hydrocarbon having 2 to 3 carbon atoms to form a ring structure,
$R^6$, $R^7$, $R^{10}$ and $R^{11}$ are not hydrogen atoms at the same time;
Y is a carbon atom or silicon atom;

$R^{13}$ and $R^{14}$ are independently aryl group;
M is Ti, Zr or Hf;
Q is independently halogen, hydrocarbon group, an anionic ligand or a neutral ligand which can be coordinated to a lone pair of electrons; and
j is an integer of 1 to 4.]

[2] The grease composition of the aforementioned [1], wherein at least one among substituents ($R^1$, $R^2$, $R^3$ and $R^4$) bonded to cyclopentadienyl group of the metallocene compound represented by the above Formula 1 is a hydrocarbon group having 4 or more carbon atoms.

[3]
The grease composition of the aforementioned [1] or [2], wherein $R^6$ and $R^{11}$, being the same, are hydrocarbon groups having 1 to 20 carbon atoms.

[4]
The grease composition of any of the aforementioned [1] to [3], wherein in the metallocene compound represented by the above Formula 1, substituent ($R^2$ or $R^3$) bonded to the 3-position of the cyclopentadienyl group is a hydrocarbon group.

[5]
The grease composition of the aforementioned [4], wherein in the metallocene compound represented by the above Formula 1, the hydrocarbon group ($R^2$ or $R^3$) bonded to the 3-position of the cyclopentadienyl group is an n-butyl group.

[6]
The grease composition of any of the aforementioned [1] to [5], wherein in the metallocene compound represented by the above Formula 1, all substituents ($R^6$ and $R^{11}$) bonded to the 2-position and the 7-position of the fluorenyl group are all tert-butyl groups.

[7]
The grease composition of any of the aforementioned [1] to [6], wherein the compound which reacts with the bridged metallocene compound to form an ion pair is a compound represented by the following Formula 6:

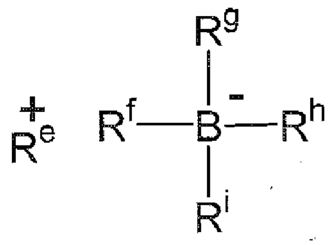

... (Formula 6)

[In Formula 6, $R^{e+}$ is $H^+$, a carbenium cation, an oxonium cation, an ammonium cation, a phosphonium cation, a cycloheptyltrienyl cation, or a ferrocenium cation having a transition metal, and $R^f$ to $R^i$ each is independently a hydrocarbon group having 1 to 20 carbon atoms.]

[8] The grease composition of the aforementioned [7], wherein the ammonium cation is a dimethylanilinium cation.

[9]
The grease composition of the aforementioned [7] or [8], wherein the catalyst system further comprises an organoaluminum compound selected from a group consisting of trimethyl aluminum and triisobutyl aluminum.

[10]
The grease composition of any of the aforementioned [1] to [9], wherein the kinematic viscosity at 40°C of the mixture of the lubricant base oil (A) and the liquid random copolymer (B) is 1 to 10,000 $mm^2/s$.

[11]
A grease composition comprising 10 to 98% by mass of lubricant base oil (A) having the properties of the below (A1) to (A3), 89 to 1% by mass of a liquid random copolymer of ethylene and $\alpha$-olefin(s) having the properties of the below (B1) to (B5), and 1 to 30% by mass of a thickener (C) (note that the sum total of the lubricant base oil (A), the copolymer and the thickener (C) is 100% by mass), the lubricant base oil (A) and the liquid random copolymer being mixed in such a ratio that the mixture of the lubricant base oil (A) and the liquid random copolymer has the properties of (D1) to (D2) below:

(A1) The lubricant base oil has a kinematic viscosity at 100°C of 1 to 14 $mm^2/s$.
(A2) The lubricant base oil has a viscosity index of 100 or more.
(A3) The lubricant base oil has a pour point of 0°C or lower.
(B1) The liquid random copolymer contains 40 to 60 mol% of the ethylene unit and 60 to 40 mol% of an $\alpha$-olefin unit having 3 to 20 carbon atoms.

(B2) The liquid random copolymer has the number average molecular weight (Mn) of 500 to 10,000 and a molecular weight distribution (Mw/Mn, Mw is the weight average molecular weight) of 3 or less measured by Gel Permeation Chromatography (GPC).
(B3) The liquid random copolymer has kinematic viscosity at 100°C of 30 to 5,000 $mm^2/s$.
(B4) The liquid random copolymer has a pour point of 30 to - 45°C.
(B5) The liquid random copolymer has a Bromine Number of 0.1g / 100g or less.
(D1) The mixture has a kinematic viscosity at 100°C of 1 to 500 $mm^2/s$.
(D2) The mixture has a viscosity index of 120 or more.

[12] The grease composition of any of the aforementioned [1] to [11], wherein the lubricant base oil (A) further has the properties of (A4) to (A6):

(A4) The lubricating-oil base oil has a kinematic viscosity at 100°C of 1 to 10 $mm^2/s$.
(A5) The lubricating-oil base oil has a viscosity index of 105 or more.
(A6) The lubricating-oil base oil has a pour point of -10°C or lower.

[13] The grease composition of any of the aforementioned [1] to [12], wherein 30 to 100% by mass of the lubricant base oil (A) is synthetic oil, and the synthetic oil is poly α-olefin (PAO) and/or ester oil having a viscosity index of 120 or more.

[14]
A Grease for automobile parts consisting of a grease composition of any of the aforementioned [1] to [13].

[15]
A method for producing a grease composition, comprising the steps of:

preparing a liquid random copolymer (B) of ethylene and α-olefin by the below method (α), and
preparing a grease composition by mixing 10 to 98% by mass of a lubricant base oil (A) having the properties of (A1) to (A3) below in the grease composition, 89 to 1% by mass of the liquid random copolymer (B) in the grease composition, and 1 to 30% by mass of a thickener (C) in the grease composition (note that the sum total of the lubricant base oil (A), the copolymer (B) and the thickener (C) is 100% by mass), in which the mixture of the lubricant base oil (A) and the liquid random copolymer (B) is mixed to have the properties of (D1) to (D2) below:

(A1) The lubricant base oil has a kinematic viscosity at 100°C of 1 to 14 $mm^2/s$.
(A2) The lubricant base oil has a viscosity index of 100 or more.
(A3) The lubricant base oil has a pour point of 0°C or lower.
(D1) The mixture has a kinematic viscosity at 100°C of 1 to 500 $mm^2/s$.
(D2) The mixture has a viscosity index of 120 or more.

(Method (α))

A method (α) for preparing a liquid random copolymer of ethylene and α-olefin, comprising a step of carrying out solution polymerization of ethylene and α-olefin having 3 to 20 carbon atoms, under a catalyst system comprising

(a) a bridged metallocene compound represented by the following Formula 1, and
(b) at least one compound selected from a group consisting of

(i) an organoaluminum oxy-compound, and
(ii) a compound which reacts with the bridged metallocene compound to form an ion pair.

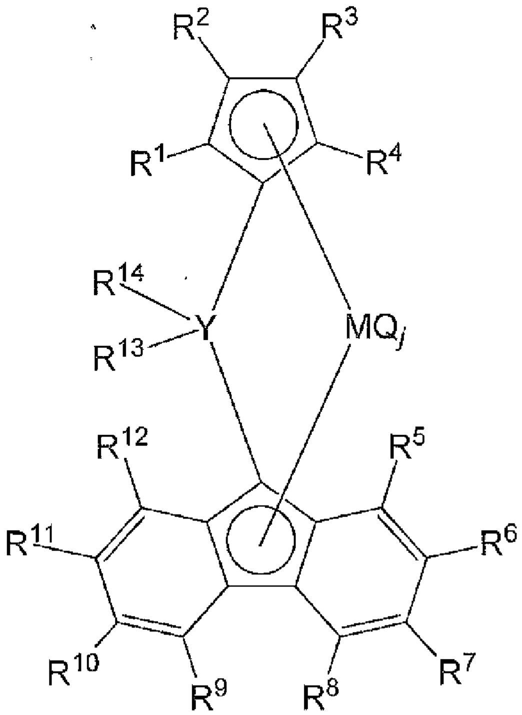

... (Formula 1)

[In Formula 1, $R^1$, $R^2$, $R^3$, $R^4$, $R^5$, $R^8$, $R^9$ and $R^{12}$ are respectively and independently hydrogen atom, hydrocarbon group or silicon-containing hydrocarbon group, and adjoining groups are optionally connected to each other to form a ring structure,

$R^6$ and $R^{11}$, being the same, are hydrogen atom, hydrocarbon group or silicon-containing hydrocarbon group,
$R^7$ and $R^{10}$, being the same, are hydrogen atom, hydrocarbon group or silicon-containing hydrocarbon group,
$R^6$ and $R^7$ are optionally connected to hydrocarbon having 2 to 3 carbon atoms to form a ring structure,
$R^{11}$ and $R^{10}$ are optionally connected to hydrocarbon having 2 to 3 carbon atoms to form a ring structure,
$R^6$, $R^7$, $R^{10}$ and $R^{11}$ are not hydrogen atom at the same time;
Y is a carbon atom or silicon atom;
$R^{13}$ and $R^{14}$ are independently aryl group;
M is Ti, Zr or Hf;
Q is independently halogen, hydrocarbon group, an anionic ligand or a neutral ligand which can be coordinated to a lone pair of electrons; and
j is an integer of 1 to 4.]

Advantageous Effects of Invention

The grease composition of the present invention has extremely excellent oil film-formation properties at high temperatures and low-torque properties at low temperatures with balance, and further has excellent thermal and oxidation stability, The grease composition is suitably applicable to grease for automobile parts.

Description of Embodiments

The grease composition according to the present invention will be explained in detail below.

The grease composition according to the present invention comprises a lubricant base oil (A), a liquid random copolymer (B) of ethylene and α-olefin prepared by the method (α) (may also be described in the present specification as "ethylene-α-olefin copolymer (B)"), and a thickener (C), and the lubricant base oil (A) and the ethylene-α-olefin copolymer (B) are mixed in such a ratio that the kinematic viscosity at 100°C is 1 to 500 $mm^2/s$ and the viscosity index is 120 or more.

< (A) Lubricant base oil >

The lubricant base oil (A) has the properties of (A1) to (A3) below.

(A1) The lubricant base oil has a kinematic viscosity at 100°C of 1 to 14 $mm^2/s$

The value of this kinematic viscosity at 100°C is that as measured in accordance with the method described in JIS K2283. The kinematic viscosity at 100°C of the lubricant base oil (A) is 1 to 14 $mm^2/s$, preferably 1 to 10 $mm^2/s$, and more preferably 2 to 8 $mm^2/s$. With the kinematic viscosity at 100°C in this range, the grease composition of the present invention has excellent balance between volatility and the temperature viscosity properties.

(A2) The lubricant base oil has a viscosity index of 100 or more

The value of this viscosity index is that as measured in accordance with the method described in JIS K2283. The viscosity index of the lubricant base oil (A) is 100 or more, preferably 105 or more, more preferably 110 or more, and further preferably 120 or more. With the viscosity index in this range, the grease composition of the present invention has excellent temperature viscosity properties.

(A3) The lubricant base oil has a pour point of 0°C or lower

The value of this pour point is that as measured in accordance with the method described in ASTM D97. The pour point of the lubricant base oil (A) is 0°C or lower, preferably -10°C or lower, and more preferably -30°C or lower. With a pour point in this range, the grease composition of the present invention has excellent low-temperature viscosity properties.

In the lubricant base oil used in the present invention, performance and quality such as viscosity properties, heat resistance and oxidation stability will differ depending on the producing and refining processes etc. of the lubricant base oil. In general, the lubricant base oil is classified broadly into a mineral oil and a synthetic oil. Moreover, the API (American Petroleum Institute) categorizes lubricant base oil into five types: Group I, II, III, IV and V. These API categories are defined in API Publication 1509, 15th Edition, Appendix E, April 2002, and is as shown in Table 1. The lubricant base oil (A) may be either mineral oil or synthetic oil, and it may be any of Group I to V in the API category. The detail is described below.

Table 1

| Group | Type | Viscosity Index *1 | Saturated hydrocarbon portion *2 (vol%) | Sulfur portion *3 (% by weight) |
|---|---|---|---|---|
| I | Mineral Oil | 80 to 120 | < 90 | > 0.03 |
| II | Mineral Oil | 80 to 120 | ≥ 90 | ≤ 0.03 |
| III | Mineral Oil | ≥ 120 | ≥ 90 | ≤ 0.03 |
| IV | Poly-α-olefin | | | |
| V | Lubricant base material other than the aforementioned | | | |

*1: Measured in accordance with ASTM D445 (JIS K2283)
*2: Measured in accordance with ASTM D3238
*3: Measured in accordance with ASTM D4294 (JIS K2541)
*4: Mineral oils whose saturated hydrocarbon portion is less than 90 vol% and sulfur portion is less than 0.03% by weight, or whose saturated hydrocarbon portion is 90 vol% or more and sulfur portion exceeds 0.03% by weight, are included in Group I.

< Mineral oil >

The mineral oil is ascribed to Groups I to III of the aforementioned API categories.
The quality of the mineral oil is as mentioned above, where the aforementioned respective qualities of mineral oil are obtainable depending on the refining method. Exemplifications of the mineral oil specifically include: a lubricant base oil, in which a lubricating oil fraction obtained by reduced pressure distillation of an atmospheric residue which is obtainable by the atmospheric distillation of crude oil, is refined by one or more treatments such as solvent deasphalting, solvent extraction, hydrocracking, solvent dewaxing, hydrorefining; or a lubricant base oil of wax isomerized mineral oil.
Moreover, a Gas-to-Liquid (GTL) base oil obtained by the Fisher-Tropsch method is a base oil which can also be suitably utilized as Group III mineral oil. Such GTL base oil is also handled as Group III+ lubricant base oil, which are described e.g. in the following Patent Literatures: EP0776959, EP0668342, WO97/21788, WO00/15736, WO00/14188, WO00/14187, WO00/14183, WO00/14179, WO00/08115, WO99/41332, EP1029029, WO01/18156 and

WO01/57166.

< Synthetic oil >

The synthetic oil is ascribed to Groups IV to V of the aforementioned API categories.

Poly-α-olefins, which are ascribed to Group IV, can be obtained by oligomerizing higher α-olefins with an acid catalyst, as described in e.g. US Patent 3,780,128, US Patent 4,032,591, and JP H01-163136 A. Of these, a low molecular weight oligomer of at least one olefin selected from an olefin having 8 or more carbon atoms can be utilized as the poly-α-olefin. If utilizing a poly-α-olefin as the lubricant base oil (A), a grease composition having remarkably excellent temperature viscosity properties, low-temperature viscosity properties, as well as heat resistance is obtainable.

Poly-α-olefins are also industrially available, where those with a 100°C kinematic viscosity of 2 $mm^2/s$ to 100 $mm^2/s$ are commercially available. Among these, the use of a poly-α-olefin of 2 to 14 $mm^2/s$ is preferable from the perspective of obtaining a grease composition with excellent temperature viscosity properties.

Examples include the NEXBASE 2000 series (made by NESTE), Spectrasyn (made by ExxonMobil Chemical), Durasyn (made by INEOS Oligomers), and Synfluid (made by Chevron Phillips Chemical).

As the synthetic oil ascribed to Group V, examples include alkyl benzenes, alkyl naphthalenes, isobutene oligomers and hydrides thereof, paraffins, polyoxy alkylene glycol, dialkyl diphenylether, polyphenylether, and esters.

Most of the alkyl benzenes and alkyl naphthalenes are usually dialkyl benzene or dialkyl naphthalene whose alkyl chain length has 6 to 14 carbon atoms, where such alkyl benzenes or alkyl naphthalenes are produced by the Friedel-Crafts alkylation reaction of benzene or naphthalene with olefin. In the production of alkyl benzenes or alkyl naphthalenes, the alkylated olefin to be utilized may be a linear or branched olefin, or may be a combination of these. These production processes are described in e.g. US Patent 3,909,432.

Moreover, as the ester, fatty acid esters are preferred from the perspective of compatibility with the ethylene-α-olefin copolymer (B).

Although there are no particular limitations on the fatty acid esters, examples include fatty acid esters consisting of only carbon, oxygen or hydrogen as mentioned below, where the examples include monoesters prepared from a monobasic acid and alcohol; diesters prepared from dibasic acid and alcohol, or from a diol with a monobasic acid or an acid mixture; or polyolesters prepared by reacting a monobasic acid or an acid mixture with a diol, triol (e.g. trimethylolpropane), tetraol (e.g. pentaerythritol), hexol (e.g. dipentaerythritol) etc. Examples of these esters include ditridecyl glutarate, di-2-ethyl hexyl adipate, diisodecyl adipate, ditridecyl adipate, di-2-ethyl hexyl sebacate, tridecyl pelargonate, di-2-ethyl hexyl adipate, di-2-ethyl hexyl azelate, trimethylolpropane caprylate, trimethylolpropane pelargonate, trimethylolpropane triheptanoate, pentaerythritol-2-ethyl hexanoate, pentaerythritol pelargonate, and pentaerythritol tetraheptanoate.

From the perspective of the compatibility with the ethylene-α-olefin copolymer (B), an alcohol having two or more functional hydroxyl groups is preferred as the alcohol moiety constituting the ester, and a fatty acid having 8 or more carbon atoms is preferred as the fatty acid moiety. However, a fatty acid having 20 or fewer carbon atoms, which is easily industrially available, is superior in terms of the manufacturing cost of the fatty acid. The effect of the present invention is also sufficiently exhibited with the use of one fatty acid constituting an ester, or with the use of a fatty acid ester prepared by means of two or more acid mixtures. Examples of fatty acid esters more specifically include a mixed triester of trimethylolpropane with lauric acid and stearic acid, and diisodecyl adipate, where these are preferable in terms of compatibility of saturated hydrocarbon components such as the ethylene-α-olefin copolymer (B), with stabilizers such as antioxidants, corrosion preventing agents, anti-wear agents, friction modifying agents, pour point lowering agents, anti-rust agents and anti-foamers mentioned below and having a polar group.

When utilizing a synthetic oil, particularly a poly-α-olefin as the lubricant base oil (A), it is preferable that the grease composition of the present invention contain a fatty acid ester in an amount of 5 to 20% by mass with respect to 100% by mass of the total grease composition. By containing a fatty acid ester of 5% by mass or more, good compatibility is obtainable with sealing materials such as resins and elastomers. Specifically, swelling of lubricating oil sealing material can be suppressed. In terms of oxidation stability or heat resistance, the amount of ester is preferably 20% by mass or less. When mineral oil is contained in the grease composition, a fatty acid ester is not necessarily required, because the mineral oil *per* se has a swelling suppression effect of the lubricating oil sealing agent.

Synthetic oil is preferable in terms that it has more excellent heat resistance and temperature viscosity property compared to mineral oil.

In the grease composition of the present invention, the synthetic oil or mineral oil may be used alone as a lubricant base oil (A), or any mixture etc. of two or more lubricating oils selected from the synthetic oil and mineral oil may be used as a lubricant base oil (A).

< (B) Ethylene-$\alpha$-olefin copolymer >

Ethylene-$\alpha$-olefin copolymer (B) is a liquid random copolymer (B) of ethylene and $\alpha$-olefin(s) prepared by the method ($\alpha$) below.

(Method ($\alpha$))

A method ($\alpha$) for preparing a liquid random copolymer of ethylene and $\alpha$-olefin(s), comprising a step of carrying out solution polymerization of ethylene and $\alpha$-olefin having 3 to 20 carbon atoms, under a catalyst system containing

(a) a bridged metallocene compound represented by the following Formula 1, and
(b) at least one compound selected from a group consisting of

(i) an organoaluminum oxy-compound, and
(ii) a compound which reacts with the bridged metallocene compound to form an ion pair.

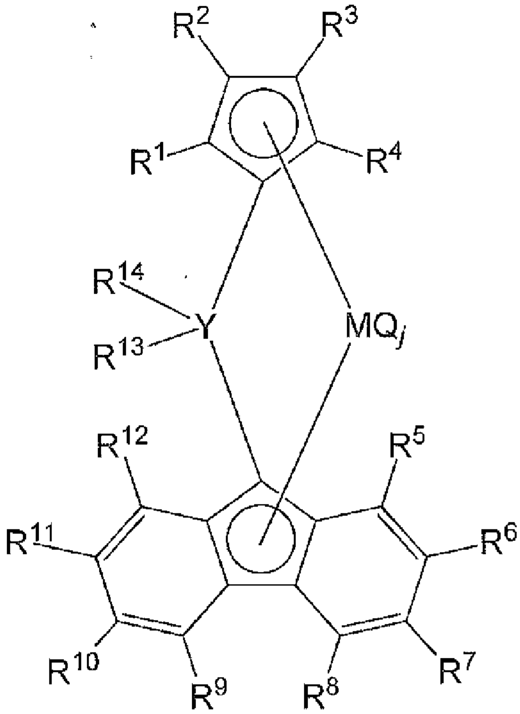

... (Formula 1)

[In Formula 1, $R^1$, $R^2$, $R^3$, $R^4$, $R^5$, $R^8$, $R^9$ and $R^{12}$ are respectively and independently hydrogen atom, hydrocarbon group or silicon-containing hydrocarbon group, and adjoining groups are optionally connected to each other to form a ring structure,

$R^6$ and $R^{11}$, being the same, are hydrogen atom, hydrocarbon group or silicon-containing hydrocarbon group,
$R^7$ and $R^{10}$, being the same, are hydrogen atom, hydrocarbon group or silicon-containing hydrocarbon group,
$R^6$ and $R^7$ are optionally connected to hydrocarbon having 2 to 3 carbon atoms to form a ring structure,
$R^{11}$ and $R^{10}$ are optionally connected to hydrocarbon having 2 to 3 carbon atoms to form a ring structure,
$R^6$, $R^7$, $R^{10}$ and $R^{11}$ are not hydrogen atom at the same time;
Y is a carbon atom or silicon atom;
$R^{13}$ and $R^{14}$ are independently aryl group;
M is Ti, Zr or Hf;
Q is independently halogen, hydrocarbon group, an anionic ligand or a neutral ligand which can be coordinated to a lone pair of electrons; and
j is an integer of 1 to 4.]

Here, the hydrocarbon group has 1 to 20 carbon atoms, preferably 1 to 15 atoms, and more preferably 4 to 10 carbon atoms, and means for example an alkyl group, aryl group etc. The aryl group has 6 to 20 carbon atoms, and

preferably 6 to 15 carbon atoms.

Examples of the silicon-containing hydrocarbon group include an alkyl or aryl group having 3 to 20 carbon atoms which contains 1 to 4 silicon atoms, and in more detail includes trimethylsilyl group, tert-butyldimethylsilyl group, triphenylsilyl group etc.

In the bridged metallocene compound represented by Formula 1, cyclopentadienyl group may be substituted or unsubstituted.

In the bridged metallocene compound represented by Formula 1,

(i) it is preferable that at least one among substituents ($R^1$, $R^2$, $R^3$ and $R^4$) bonded to cyclopentadienyl group is a hydrocarbon group,
(ii) it is more preferable that at least one among substituents ($R^1$, $R^2$, $R^3$ and $R^4$) is a hydrocarbon group having 4 or more carbon atoms,
(iii) it is most preferable that substituent ($R^2$ or $R^3$) bonded to the 3-position of the cyclopentadienyl group is a hydrocarbon group having 4 or more carbon atoms (for example an n-butyl group).

In case where at least two among $R^1$, $R^2$, $R^3$ and $R^4$ are substituents (that is, being not hydrogen atom), the above-mentioned substituents may be the same or be different, and it is preferable that at least one substituent is a hydrocarbon group having 4 or more carbon atoms.

In the metallocene compound represented by Formula 1, $R^6$ and $R^{11}$ bonded to fluorenyl group are the same, $R^7$ and $R^{10}$ are the same, but $R^6$, $R^7$, $R^{10}$ and $R^{11}$ are not hydrogen atom at the same time. In high-temperature solution polymerization of poly-$\alpha$-olefin, in order to improve the polymerization activity, preferably neither $R^6$ nor $R^{11}$ is hydrogen atom, and more preferably none of $R^6$, $R^7$, $R^{10}$ and $R^{11}$ is hydrogen atom. For example, $R^6$ and $R^{11}$ bonded to the 2-position and 7-position of the fluorenyl group are the same hydrocarbon group having 1 to 20 carbon atoms, and preferably all tert-butyl groups, and $R^7$ and $R^{10}$ are the same hydrocarbon group having 1 to 20 carbon atoms, and preferably all tert-butyl groups.

The main chain part (bonding part, Y) connecting the cyclopentadienyl group and the fluorenyl group is a cross-linking section of two covalent bonds comprising one carbon atom or silicon atom, as a structural bridge section imparting steric rigidity to the bridged metallocene compound represented by Formula 1. Cross-linking atom (Y) in the cross-linking section has two aryl groups ($R^{13}$ and $R^{14}$) which may be the same or different. Therefore, the cyclopentadienyl group and the fluorenyl group are bonded by the covalent bond cross-linking section containing an aryl group. Examples of the aryl group include a phenyl group, naphthyl group, anthracenyl group, and a substituted aryl group (which is formed by substituting one or more aromatic hydrogen ($sp^2$-type hydrogen) of a phenyl group, naphthyl group or anthracenyl group, with substituents). Examples of substituents in the aryl group include a hydrocarbon group having 1 to 20 carbon atoms, a silicon-containing hydrocarbon group having 1 to 20 carbon atoms, a halogen atom etc., and preferably include a phenyl group. In the bridged metallocene compound represented by Formula 1, preferably $R^{13}$ and $R^{14}$ are the same in view of easy production.

In the bridged metallocene compound represented by Formula 1, Q is preferably a halogen atom or hydrocarbon group having 1 to 10 carbon atoms. The halogen atom includes fluorine, chlorine, bromine or iodine. The hydrocarbon group having 1 to 10 carbon atoms includes methyl, ethyl, n-propyl, isopropyl, 2-methylpropyl, 1,1-dimethylpropyl, 2,2-dimethylpropyl, 1,1-diethylpropyl, 1-ethyl-1-methylpropyl, 1,1,2,2-tetramethylpropyl, sec-butyl, tert-butyl, 1,1-dimethylbutyl, 1,1,3-trimethylbutyl, neopentyl, cyclohexyl methyl, cyclohexyl, 1-methyl-1-cyclohexyl etc. Further, when j is an integer of 2 or more, Q may be the same or different.

Examples of such bridged metallocene compounds (a) include:

ethylene [$\eta^5$-(3-tert-butyl-5-methyl cyclopentadienyl)] ($\eta^5$-fluorenyl) zirconium dichloride, ethylene [$\eta^5$-(3-tert-butyl-5-methyl cyclopentadienyl)] [$\eta^5$-(3,6-di-tert-butyl fluorenyl)] zirconium dichloride, ethylene [$\eta^5$-(3-tert-butyl-5-methyl cyclopentadienyl)] [$\eta^5$-(2,7-di-tert-butyl fluorenyl)] zirconium dichloride, ethylene [$\eta^5$-(3-tert-butyl-5-methyl cyclopentadienyl)] (octamethyl octahydrodibenzofluorenyl) zirconium dichloride, ethylene [$\eta^5$-(3-tert-butyl-5-methyl cyclopentadienyl)] (benzofluorenyl) zirconium dichloride, ethylene [$\eta^5$-(3-tert-butyl-5-methyl cyclopentadienyl)] (dibenzofluorenyl) zirconium dichloride, ethylene [$\eta^5$-(3-tert-butyl-5-methyl cyclopentadienyl)] (octahydrodibenzofluorenyl) zirconium dichloride, ethylene [$\eta^5$-(3-tert-butyl-5-methyl cyclopentadienyl)] [$\eta^5$-(2,7-diphenyl-3,6-di-tert-butyl fluorenyl)] zirconium dichloride, ethylene [$\eta^5$-(3-tert-butyl-5-methyl cyclopentadienyl)] [$\eta^5$-(2,7-dimethyl-3,6-di-tert-butyl fluorenyl)] zirconium dichloride;
ethylene [$\eta^5$-(3-tert-butyl cyclopentadienyl)] ($\eta^5$-fluorenyl) zirconium dichloride, ethylene [$\eta^5$-(3-tert-butyl cyclopentadienyl)] [$\eta^5$-(3,6-di-tert-butyl fluorenyl)] zirconium dichloride, ethylene [$\eta^5$-(3-tert-butyl cyclopentadienyl)] [$\eta^5$-(2,7-di-tert-butyl fluorenyl)] zirconium dichloride, ethylene [$\eta^5$-(3-tert-butyl cyclopentadienyl)] (octamethyl octahydrodibenzofluorenyl) zirconium dichloride, ethylene [$\eta^5$-(3-tert-butyl cyclopentadienyl)] (benzofluorenyl) zirconium dichloride, ethylene [$\eta^5$-(3-tert-butyl cyclopentadienyl)] (dibenzofluorenyl) zirconium dichloride, ethylene [$\eta^5$-(3-tert-butyl

cyclopentadienyl)] (octahydrodibenzofluorenyl) zirconium dichloride, ethylene [η5-(3-tert-butyl cyclopentadienyl)] [η5-(2,7-diphenyl-3,6-di-tert-butyl fluorenyl)] zirconium dichloride, ethylene [η5-(3-tert-butyl cyclopentadienyl)] [η5-(2,7-dimethyl-3,6-di-tert-butyl fluorenyl)] zirconium dichloride;

ethylene [η5-(3-n-butyl cyclopentadienyl)] (η5-fluorenyl) zirconium dichloride, ethylene [η5-(3-n-butyl cyclopentadienyl)] [η5-(3,6-di-tert-butyl fluorenyl)] zirconium dichloride, ethylene [η5-(3-n-butyl cyclopentadienyl)] [η5-(2,7-di-tert-butyl fluorenyl)] zirconium dichloride, ethylene [η5-(3-n-butyl cyclopentadienyl)] (octamethyl octahydrodibenzofluorenyl) zirconium dichloride, ethylene [η5-(3-n-butyl cyclopentadienyl)] (benzofluorenyl) zirconium dichloride, ethylene [η5-(3-n-butyl cyclopentadienyl)] (dibenzofluorenyl) zirconium dichloride, ethylene [η5-(3-n-butyl cyclopentadienyl)] (octahydrodibenzofluorenyl) zirconium dichloride, ethylene [η5-(3-n-butyl cyclopentadienyl)] [η5-(2,7-diphenyl-3,6-di-tert-butyl fluorenyl)] zirconium dichloride, ethylene [η5-(3-n-butyl cyclopentadienyl)] [η5-(2,7-dimethyl-3,6-di-tert-butyl fluorenyl)] zirconium dichloride;

diphenylmethylene [η5-(3-tert-butyl-5-methyl cyclopentadienyl)] (η5-fluorenyl) zirconium dichloride, diphenylmethylene [η5-(3-tert-butyl-5-methyl cyclopentadienyl)] [η5-(3,6-di-tert-butyl fluorenyl)] zirconium dichloride, diphenylmethylene [η5-(3-tert-butyl-5-methyl cyclopentadienyl)] [η5-(2,7-di-tert-butyl fluorenyl)] zirconium dichloride, diphenylmethylene [η5-(3-tert-butyl-5-methyl cyclopentadienyl)] (octamethyl octahydrodibenzofluorenyl) zirconium dichloride, diphenylmethylene [η5-(3-tert-butyl-5-methyl cyclopentadienyl)] (benzofluorenyl) zirconium dichloride, diphenylmethylene [η5-(3-tert-butyl-5-methyl cyclopentadienyl)] (dibenzofluorenyl) zirconium dichloride, diphenylmethylene [η5-(3-tert-butyl-5-methyl cyclopentadienyl)] (octahydrodibenzofluorenyl) zirconium dichloride, diphenylmethylene [η5-(3-tert-butyl-5-methyl cyclopentadienyl)] [η5-(2,7-diphenyl-3,6-di-tert-butyl fluorenyl)] zirconium dichloride, diphenylmethylene [η5-(3-tert-butyl-5-methyl cyclopentadienyl)] [η5-(2,7-dimethyl-3,6-di-tert-butyl fluorenyl)] zirconium dichloride;

diphenylmethylene [η5-(3-tert-butyl cyclopentadienyl)] (η5-fluorenyl) zirconium dichloride, diphenylmethylene [η5-(3-tert-butyl cyclopentadienyl)] [η5-(3,6-di-tert-butyl fluorenyl)] zirconium dichloride, diphenylmethylene [η5-(3-tert-butyl cyclopentadienyl)] [η5-(2,7-di-tert-butyl fluorenyl)] zirconium dichloride, diphenylmethylene [η5-(3-tert-butyl cyclopentadienyl)] (octamethyl octahydrodibenzofluorenyl) zirconium dichloride, diphenylmethylene [η5-(3-tert-butyl cyclopentadienyl)] (benzofluorenyl) zirconium dichloride, diphenylmethylene [η5-(3-tert-butyl cyclopentadienyl)] (dibenzofluorenyl) zirconium dichloride, diphenylmethylene [η5-(3-tert-butyl cyclopentadienyl)] (octahydrodibenzofluorenyl) zirconium dichloride, diphenylmethylene [η5-(3-tert-butyl cyclopentadienyl)] [η5-(2,7-diphenyl-3,6-di-tert-butyl fluorenyl)] zirconium dichloride, diphenylmethylene [η5-(3-tert-butyl cyclopentadienyl)] [η5-(2,7-dimethyl-3,6-di-tert-butyl fluorenyl)] zirconium dichloride;

diphenylmethylene [η5-(3-n-butyl cyclopentadienyl)] (η5-fluorenyl) zirconium dichloride, diphenylmethylene [η5-(3-n-butyl cyclopentadienyl)] [η5-(3,6-di-tert-butyl fluorenyl)] zirconium dichloride, diphenylmethylene [η5-(3-n-butyl cyclopentadienyl)] [η5-(2,7-di-tert-butyl fluorenyl)] zirconium dichloride, diphenylmethylene [η5-(3-n-butyl cyclopentadienyl)] (octamethyl octahydrodibenzofluorenyl) zirconium dichloride, diphenylmethylene [η5-(3-n-butyl cyclopentadienyl)] (benzofluorenyl) zirconium dichloride, diphenylmethylene [η5-(3-n-butyl cyclopentadienyl)] (dibenzofluorenyl) zirconium dichloride, diphenylmethylene [η5-(3-n-butyl cyclopentadienyl)] (octahydrodibenzofluorenyl) zirconium dichloride, diphenylmethylene [η5-(3-n-butyl cyclopentadienyl)] [η5-(2,7-diphenyl-3,6-di-tert-butyl fluorenyl)] zirconium dichloride, diphenylmethylene [η5-(3-n-butyl cyclopentadienyl)] [η5-(2,7-dimethyl-3,6-di-tert-butyl fluorenyl)] zirconium dichloride;

di(p-tolyl) methylene [η5-(3-tert-butyl-5-methyl cyclopentadienyl)] (η5-fluorenyl) zirconium dichloride, di(p-tolyl) methylene [η5-(3-tert-butyl-5-methyl cyclopentadienyl)] [η5-(3,6-di-tert-butyl fluorenyl)] zirconium dichloride, di(p-tolyl) methylene [η5-(3-tert-butyl-5-methyl cyclopentadienyl)] [η5-(2,7-di-tert-butyl fluorenyl)] zirconium dichloride, di(p-tolyl) methylene [η5-(3-tert-butyl-5-methyl cyclopentadienyl)] (octamethyl octahydrodibenzofluorenyl) zirconium dichloride, di(p-tolyl) methylene [η5-(3-tert-butyl-5-methyl cyclopentadienyl)] (benzofluorenyl) zirconium dichloride, di(p-tolyl) methylene [η5-(3-tert-butyl-5-methyl cyclopentadienyl)] (dibenzofluorenyl) zirconium dichloride, di(p-tolyl) methylene [η5-(3-tert-butyl-5-methyl cyclopentadienyl)] (octahydrodibenzofluorenyl) zirconium dichloride, di(p-tolyl) methylene [η5-(3-tert-butyl-5-methyl cyclopentadienyl)] [η5-(2,7-diphenyl-3,6-di-tert-butyl fluorenyl)] zirconium dichloride, di(p-tolyl) methylene [η5-(3-tert-butyl-5-methyl cyclopentadienyl)] [η5-(2,7-dimethyl-3,6-di-tert-butyl fluorenyl)] zirconium dichloride;

di(p-tolyl) methylene [η5-(3-tert-butyl cyclopentadienyl)] (η5-fluorenyl) zirconium dichloride, di(p-tolyl) methylene [η5-(3-tert-butyl cyclopentadienyl)] [η5-(3,6-di-tert-butyl fluorenyl)] zirconium dichloride, di(p-tolyl) methylene [η5-(3-tert-butyl cyclopentadienyl)] [η5-(2,7-di-tert-butyl fluorenyl)] zirconium dichloride, di(p-tolyl) methylene [η5-(3-tert-butyl cyclopentadienyl)] (octamethyl octahydrodibenzofluorenyl) zirconium dichloride, di(p-tolyl) methylene [η5-(3-tert-butyl cyclopentadienyl)] (benzofluorenyl) zirconium dichloride, di(p-tolyl) methylene [η5-(3-tert-butyl cyclopentadienyl)] (dibenzofluorenyl) zirconium dichloride, di(p-tolyl) methylene [η5-(3-tert-butyl cyclopentadienyl)] (octahydrodibenzofluorenyl) zirconium dichloride, di(p-tolyl) methylene [η5-(3-tert-butyl cyclopentadienyl)] [η5-(2,7-diphenyl-3,6-di-tert-butyl fluorenyl)] zirconium dichloride, di(p-tolyl) methylene [η5-(3-tert-butyl cyclopentadienyl)] [η5-(2,7-dimethyl-3,6-di-tert-butyl fluorenyl)] zirconium dichloride; and

di(p-tolyl) methylene [$\eta^5$-(3-n-butyl cyclopentadienyl)] ($\eta^5$-fluorenyl) zirconium dichloride, di(p-tolyl) methylene [$\eta^5$-(3-n-butyl cyclopentadienyl)] [$\eta^5$-(3,6-di-tert-butyl fluorenyl)] zirconium dichloride, di(p-tolyl) methylene [$\eta^5$-(3-n-butyl cyclopentadienyl)] [$\eta^5$-(2,7-di-tert-butyl fluorenyl)] zirconium dichloride, di(p-tolyl) methylene [$\eta^5$-(3-n-butyl cyclopentadienyl)] (octamethyl octahydrodibenzofluorenyl) zirconium dichloride, di(p-tolyl) methylene [$\eta^5$-(3-n-butyl cyclopentadienyl)] (benzofluorenyl) zirconium dichloride, di(p-tolyl) methylene [$\eta^5$-(3-n-butyl cyclopentadienyl)] (dibenzofluorenyl) zirconium dichloride, di(p-tolyl) methylene [$\eta^5$-(3-n-butyl cyclopentadienyl)] (octahydrodibenzofluorenyl) zirconium dichloride, di(p-tolyl) methylene [$\eta^5$-(3-n-butyl cyclopentadienyl)] (2,7-diphenyl-3,6-di-tert-butyl fluorenyl) zirconium dichloride, di(p-tolyl) methylene [$\eta^5$-(3-n-butyl cyclopentadienyl)] [$\eta^5$-(2,7-dimethyl-3,6-di-tert-butyl fluorenyl)] zirconium dichloride.

Although compounds whose zirconium atoms were substituted with hafnium atoms, or compounds whose chloro ligands were substituted with methyl groups etc. are exemplified in these compounds, the bridged metallocene compound (a) is not limited to these exemplifications.

As the organoaluminum oxy-compound used in the catalyst system in the present invention, conventional aluminoxane can be used. For example, linear or ring type aluminoxane represented by the following Formulas 2 to 5 can be used. A small amount of organic aluminum compound may be contained in the organoaluminum oxy-compound.

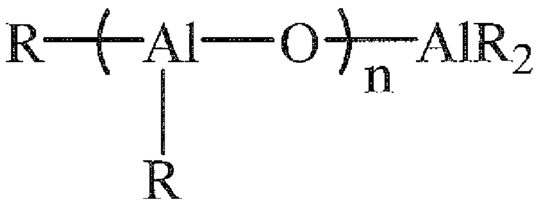

... (Formula 2)

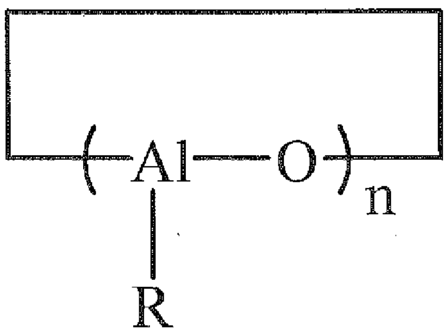

... (Formula 3)

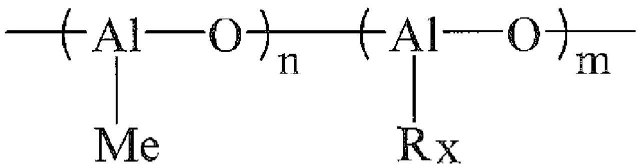

... (Formula 4)

In Formulae 2 to 4, R is independently a hydrocarbon group having 1 to 10 carbon atoms, Rx is independently a hydrocarbon group having 2 to 20 carbon atoms, m and n are independently an integer of 2 or more, preferably 3 or more, more preferably 10 to 70, and most preferably 10 to 50.

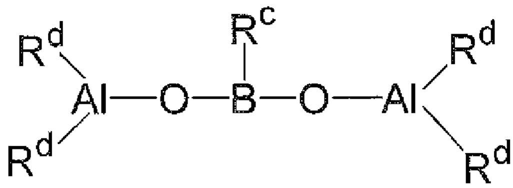

... (Formula 5)

In Formula 5, $R^c$ is a hydrocarbon group having 1 to 10 carbon atoms, and $R^d$ is independently a hydrogen atom, halogen

atom or hydrocarbon group having 1 to 10 carbon atoms.

In Formula 2 or Formula 3, R is a methyl group (Me) of the organoaluminum oxy-compound which is conventionally referred to as "methylaluminoxane".

The methylaluminoxane is easily available and has high polymerization activity, and thus it is commonly used as an activator in the polyolefin polymerization. However, the methylaluminoxane is difficult to dissolve in a saturated hydrocarbon, and thus it has been used as a solution of aromatic hydrocarbon such as toluene or benzene, which is environmentally undesirable. Therefore, in recent years, a flexible body of methylaluminoxane represented by Formula 4 has been developed and used as an aluminoxane dissolved in the saturated hydrocarbon. The modified methylaluminoxane represented by Formula 4 is prepared by using a trimethyl aluminum and an alkyl aluminum other than the trimethyl aluminum as shown in US Patent 4960878 and US Patent 5041584, and for example, is prepared by using trimethyl aluminum and triisobutyl aluminum. The aluminoxane in which Rx is an isobutyl group is commercially available under the trade name of MMAO and TMAO, in the form of a saturated hydrocarbon solution. (See Tosoh Finechem Corporation, Tosoh Research & Technology Review, Vol 47, 55 (2003)).

As (ii) the compound which reacts with the bridged metallocene compound to form an ion pair (hereinafter, referred to as "ionic compound" as required) which is contained in the present catalyst system, a Lewis acid, ionic compounds, borane, borane compounds and carborane compounds can be used. These are described in patent literatures, Korean Patent No. 10-551147 A, JP H01-501950 A, JP H03-179005 A, JP H03-179006 A, JP H03-207703 A, JP H03-207704 A, US Patent 5321106 and so on. If needed, heteropoly compounds, and isopoly compound etc. can be used, and the ionic compound disclosed in JP 2004-51676 A can be used. The ionic compound may be used alone or by mixing two or more. In more detail, examples of the Lewis acid include the compound represented by $BR_3$ (R is fluoride, substituted or unsubstituted alkyl group having 1 to 20 carbon atoms (methyl group, etc.), substituted or unsubstituted aryl group having 6 to 20 carbon atoms (phenyl group, etc.), and also includes for example, trifluoro boron, triphenyl boron, tris(4-fluorophenyl) boron, tris(3,5-difluorophenyl) boron, tris(4-fluorophenyl) boron, tris(pentafluorophenyl) and boron tris(p-tolyl) boron. When the ionic compound is used, its use amount and sludge amount produced are relatively small in comparison with the organoaluminum oxy-compound, and thus it is economically advantageous. In the present invention, it is preferable that the compound represented by the following Formula 6 is used as the ionic compound.

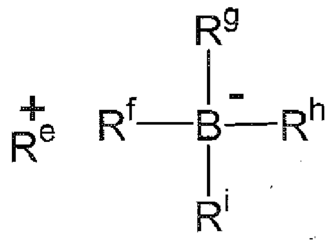

··· (Formula 6)

In Formula 6, $R^{e+}$ is $H^+$, a carbenium cation, an oxonium cation, an ammonium cation, a phosphonium cation, a cycloheptyltrienyl cation, or a ferrocenium cation having a transition metal, and $R^f$ to $R^i$ each is independently an organic group, preferably a hydrocarbon group having 1 to 20 carbon atoms, and more preferably an aryl group, for example, a penta-fluorophenyl group. Examples of the carbenium cation include a tris(methylphenyl)carbenium cation and a tris(dimethylphenyl)carbenium cation, and examples of the ammonium cation include a dimethylanilinium cation.

Examples of compounds represented by the aforementioned Formula 6 preferably include N,N-dialkyl anilinium salts, and specifically include N,N-dimethylanilinium tetraphenylborate, N,N-dimethylanilinium tetrakis (pentafluorophenyl) borate, N,N-dimethylanilinium tetrakis (3,5-ditrifluoro methylphenyl) borate, N,N-diethyl anilinium tetraphenylborate, N,N-diethyl anilinium tetrakis (pentafluorophenyl) borate, N,N-diethyl anilinium tetrakis (3,5-ditrifluoro methylphenyl) borate, N,N-2,4,6-penta methylanilinium tetraphenylborate, and N,N-2,4,6-penta methylanilinium tetrakis (pentafluorophenyl) borate.

The catalyst system used in the present invention further includes (c) an organoaluminum compound when it is needed. The organoaluminum compound plays a role of activating the bridged metallocene compound, the organoaluminum oxy-compound, and the ionic compound, etc. As the organoaluminum compound, preferably an organoaluminum represented by the following Formula 7, and alkyl complex compounds of the Group 1 metal and aluminum represented by the following Formula 8 can be used.

$R^a_m Al (OR^b)_n H_p X_q$ ... Formula 7

In Formula 7, $R^a$ and $R^b$ each is independently a hydrocarbon group having 1 to 15 carbon atoms, preferably 1 to 4 carbon atoms, and X is a halogen atom, m is an integer of $0<m\leq3$, n is an integer of $0\leq n\leq3$, p is an integer of

$0<p\leq3$, q is an integer of $0\leq q<3$, and $m+n+p+q=3$.

$M^2AlR^a_4$ ... Formula 8

In Formula 8, $M^2$ represents Li, Na or K, and $R^a$ is a hydrocarbon group having 1 to 15 carbon atoms, and preferably 1 to 4 carbon atoms.

Examples of the organoaluminum compound represented by Formula 7 include trimethyl aluminum and triisobutyl aluminum etc., which are easily available. Examples of the alkyl complex compounds of Group 1 metal and aluminum represented by Formula 8 include $LiAl(C_2H_5)_4$, $LiAl(C_7H_{15})_4$ etc. Compounds similar to the compounds represented by Formula 7 can be used. For example, like $(C_2H_5)_2AlN(C_2H_5)Al(C_2H_5)_2$, an organoaluminum compound to which at least 2 aluminum compounds are bonded through nitrogen atoms, can be used.

In the method for preparing the ethylene-α-olefin copolymer (B), the amount of (a) the bridged metallocene compound represented by Formula 1 is preferably 5 to 50% by weight with respect to total catalyst composition. Moreover, preferably the amount of (b) (i) the organoaluminum oxy-compound is 50 to 500 equivalent weight with respect to the molar number of the bridged metallocene compound to be used, the amount of (b) (ii) the compound which reacts with the bridged metallocene compound to form an ion pair is 1 to 5 equivalent weight with respect to the molar number of bridged metallocene compound to be used, and the amount of (c) the organoaluminum compound is 5 to 100 equivalent weight with respect to the molar number of the bridged metallocene compound to be used.

The catalyst system used in the present invention may have the following [1] to [4] for example.

[1] (a) the bridged metallocene compound represented by Formula 1, and (b) (i) the organoaluminum oxy-compound.
[2] (a) the bridged metallocene compound represented by Formula 1, (b) (i) the organoaluminum oxy-compound and (c) the organoaluminum compound.
[3] (a) the bridged metallocene compound represented by Formula 1, (b) (ii) the compound which reacts with the bridged metallocene compound to form an ion pair, and (c) the organoaluminum compound.
[4] (a) the bridged metallocene compound represented by Formula 1, and (b) (i) the organoaluminum oxy-compound and (ii) the compound which reacts with the bridged metallocene compound to form an ion pair.

(a) The bridged metallocene compound represented by Formula 1 (element (a)), (b) (i) the organoaluminum oxy-compound (element (b)), (ii) the compound which reacts with the bridged metallocene compound to form an ion pair and/or (c) the organoaluminum compound (element (c)) may be introduced in any order, to a starting raw material monomer (a mixture of ethylene and α-olefin having 3 to 20 carbon atoms). For example, elements (a), (b) and/or (c) are introduced alone or in any order, to a polymerization reactor with which raw material monomer is filled. Alternatively, if required, at least two elements among (a), (b) and/or (c) are mixed and then the mixed catalyst composition is introduced to the polymerization reactor with which raw material monomer is filled.

The ethylene-α-olefin copolymer (B) is prepared by a solution polymerization of ethylene and α-olefin having 3 to 20 carbon atoms under the catalyst system. As the α-olefin having 3 to 20 carbon atoms, one or more among linear α-olefins such as propylene, 1-butene, 1-penetene, 1-hexene etc., branched α-olefins such as isobutylene, 3-methyl-1-butene, 4-methyl-1-penetene etc. and mixtures thereof can be used. Preferably, one or more α-olefins having 3 to 6 carbon atoms can be used, and more preferably, propylene can be used. The solution polymerization can be carried out by using an inert solvent such as propane, butane or hexane etc. or an olefin monomer itself as a medium. In the copolymerization of ethylene and α-olefin of the present invention, the temperature for the copolymerization is conventionally 80 to 150°C and preferably 90 to 120°C, and the pressure for the copolymerization is conventionally atmospheric pressure to 500 kgf/cm$^2$ and preferably atmospheric pressure to 50 kgf/cm$^2$, which can vary in accordance with reacting materials, reacting conditions, etc.

Batch-, semi-continuous- or continuous-type polymerization can be carried out, and continuous-type polymerization is preferably carried out.

The ethylene-α-olefin copolymer (B) is in liquid phase at room temperature, and has a structure where the α-olefin units are uniformly distributed in the copolymer chain. The ethylene-α-olefin copolymer (B) comprises e.g. 60 to 40 mol%, preferably 45 to 55 mol%, of ethylene units derived from ethylene, and further comprises e.g. 40 to 60 mol%, preferably 45 to 55 mol%, of α-olefin units having 3 to 20 carbon atoms which are derived from α-olefin having 3 to 20 carbon atoms.

The number average molecular weight (Mn) of the ethylene-α-olefin copolymer (B) is e.g. 500 to 10,000 and preferably 800 to 6,000, and the molecular weight distribution (Mw/Mn, Mw is weight average molecular weight) is e.g. 3 or less and preferably 2 or less. The number average molecular weight (Mn) and the molecular weight distribution (Mw/Mn) are measured by gel permeation chromatography (GPC).

The ethylene-α-olefin copolymer (B) has a kinematic viscosity at 100°C of e.g. 30 to 5,000 and preferably 50 to 3,000 mm$^2$/s, a pour point of e.g. 30 to -45°C and preferably 20 to -35°C, and a Bromine Number of 0.1 / 100 g or less.

In the bridged metallocene compound represented by Formula 1, the polymerization activity is particularly high with respect to the copolymerization of ethylene with α-olefin. Utilizing this bridged metallocene compound selectively stops polymerization by hydrogen introduction at the molecular terminals, and thus there is little unsaturated bonding of the resulting ethylene-α-olefin copolymer (B). Moreover, since the ethylene-α-olefin copolymer (B) has a high random copolymerization, it has a controlled molecular weight distribution, and thus has excellent shear stability and viscosity properties. Therefore, it is considered that the grease composition of the present invention containing the ethylene-α-olefin copolymer (B) has extremely excellent oil film-formation properties at high temperatures and low-torque properties at low temperatures with balance, and further has excellent thermal and oxidation stability.

< (C) Thickener >

Various publicly known thickeners may be used as the thickener (C) contained in the grease composition of the present invention. Specific examples include, for example, soap-based thickeners exemplified by lithium soap and complex lithium soap, urea-based thickeners exemplified by diurea, inorganic thickeners exemplified by organoclays and silica, and organic thickeners exemplified by polytetrafluoroethylene and melaminecyanurate.

Examples of soap-based thickeners include, for example, sodium soap, lithium soap, calcium soap, aluminum soap, complex sodium soap, complex lithium soap, complex calcium soap, complex aluminum soap, and complex barium soap. Among these soaps, lithium soap is preferable because of having high versatilities and excellent balance between heat-resistance stability and water resistance. Among them, lithium 1,2-hydroxystearate is especially preferable.

Urea-based thickeners can be obtained by, for example, reacting predetermined diisocyanate with predetermined monoamine in base oil. A preferable specific example of the diisocyanate is diphenylmethane-4,4'-diisocyanate. Examples of the monoamine include fatty amines, aromatic amines, alicyclic amines or mixtures thereof. Specific examples of the fatty amines include octylamine, dodecylamine, hexadecylamine, octadecylamine and oleylamine. Specific examples of the aromatic amines include aniline and p-toluidine. Specific examples of the alicyclic amines include cyclohexylamine.

< Grease composition >

The grease composition according to the present invention contains the lubricant base oil (A), the ethylene-α-olefin copolymer (B) and the thickener (C).

The grease composition of the present invention contains each component in the following ratio: 10 to 98% by mass of the lubricant base oil (A), 89 to 1% by mass of the ethylene-α-olefin copolymer (B), and 1 to 30% by mass of the thickener (C), where the sum total of the lubricant base oil (A), the ethylene-α-olefin copolymer (B) and the thickener (C) is 100% by mass. The grease composition according to the present invention preferably contains 20 to 90% by mass of the lubricant base oil (A), 79 to 5% by mass of the ethylene-α-olefin copolymer (B), and 1 to 20% by mass of the thickener (C), more preferably contains 30 to 80% by mass of the lubricant base oil (A), 68 to 10% by mass of the ethylene-α-olefin copolymer (B), and 2 to 10% by mass of the thickener (C), and further more preferably contains 30 to 60% by mass of the lubricant base oil (A), 60 to 30% by mass of the ethylene-α-olefin copolymer (B), and 2 to 10% by mass of the thickener (C).

In terms of enhancing the heat resistance and the temperature viscosity property of the grease composition, it is preferable that the lubricant base oil (A) contain 30 to 100% by mass of a synthetic oil and the synthetic oil be a poly-α-olefin and/or ester oil having a viscosity index of 120 or more. It is more preferable that the lubricant base oil (A) contain 50 to 100% by mass of synthetic oil and further preferable that it contain 80 to 100% by mass of synthetic oil.

In the grease composition according to the present invention, the lubricant base oil (A) and the ethylene-α-olefin copolymer (B) are mixed in such a ratio that the mixture of the lubricant base oil (A) and the ethylene-α-olefin copolymer (B) has the properties of (D1) to (D2) below.

(D1) The mixture has a kinematic viscosity at 100°C of 1 to 500 $mm^2/s$

The kinematic viscosity at 100°C (kinematic viscosity measured in accordance with the method described in JIS K2283) is 1 to 500 $mm^2/s$, more preferably 5 to 300 $mm^2/s$, and especially preferably 20 to 200 $mm^2/s$. If the kinematic viscosity at 100°C of the mixture of the lubricant base oil (A) and the ethylene-α-olefin copolymer (B) is excessively over 500 $mm^2/s$, the low-temperature property of the grease composition decreases and automobiles having parts that use this grease composition have deteriorated in fuel-saving properties. If the kinematic viscosity at 100°C is excessively lower than 1 $mm^2/s$, oil films of the grease composition cannot be maintained sufficiently at high temperatures.

(D2) The mixture has a viscosity index of 120 or more

This viscosity index (viscosity index measured in accordance with the method described in JIS K2283) is 120 or more, preferably 130 or more, and more preferably 140 or more. With the viscosity index in this range, the grease composition has an excellent temperature viscosity property and can cope with both oil-film thickness at elevated temperatures and the low-temperature property.

In the grease composition according to the present invention, the lubricant base oil (A) and the ethylene-$\alpha$-olefin copolymer (B) are mixed in such a ratio that the kinematic viscosity at 40°C of the mixture of the lubricant base oil (A) and the ethylene-$\alpha$-olefin copolymer (B) (kinematic viscosity measured in accordance with the method described in JIS K2283) is preferably 1 to 10,000 $mm^2/s$, more preferably 1 to 2,000 $mm^2/s$, and further preferably 1 to 500 $mm^2/s$. With the kinematic viscosity at 40°C in this range, the grease composition has an excellent low-temperature property.

The worked penetration of the grease composition according to the present invention (worked penetration calculated from a depth of penetration for five seconds of a circular cone that is attached to a penetrometer and that fell down into a sample at 25°C, in accordance with the grease consistency testing method (ASTM D217)) is preferably 200 to 430, more preferably 220 to 385, and further preferably 265 to 295 (that corresponds to NLGI NO.2). When the worked penetration is 430 or less, the grease composition tends to keep lubricity with avoiding grease dropping upon use. When the worked penetration is 200 or more, energy loss upon stirring of the grease composition is small and thus the fuel-saving property of the automobiles having parts that use the grease composition becomes excellent. The worked penetration can be increased or decreased for example by adjusting the added amount of the thickener.

The dropping point (temperature at the time when the sample dropped for the first time when heating the sample with 1 to 1.5°C/minute of increasing temperature speed in accordance with JIS K2220) of the grease composition according to the present invention is preferably 150°C or higher, more preferably 180°C or higher, and further preferably 200°C or higher. With the dropping point in this range, the grease composition is difficult to drop at high temperatures and it keeps lubricity. The dropping point can be increased or decreased by, for example, selecting the type of thickeners.

The evaporation amount (evaporation amount calculated based on the mass decreased after heating the sample at 99°C for 22 hours in accordance with JIS K2220) of the grease composition in the present invention is preferably 1% or less, more preferably 0.5% or less, and more preferably 0.3% or less. With the evaporation amount in this range, the grease composition has excellent long-term heat resistance. The evaporation amount can be decreased by for example selecting lubricant base oils having high viscosity and small reduced amount upon evaporation or using ethylene-$\alpha$-olefin having sufficiently high molecular weight and narrow molecular weight distribution.

The oil separation (oil separation calculated from the mass of oil that was separated from the sample after heating the sample for 24 hours at 100°C in accordance with JIS K2220) of the grease composition according to the present invention is preferably 20% or less, more preferably 15% or less, and more preferably 10% or less. With the oil separation in this range, the grease composition has excellent long-term heat resistance. The oil separation can be increased or decreased by, for example, selecting the type of thickeners.

For the low-temperature torque at -40°C (torque measured at -40°C in accordance with the grease low-temperature testing method (JIS K2220-18) by filling samples into an open bearing as defined in JIS B1521) of the grease composition according to the present invention, the starting torque is preferably 500 mN·m or less, more preferably 250 mN·m, and further preferably 150 mN·m, and the rotation torque is preferably 200 mN·m or less, more preferably 120 mN·m or less, and more preferably 80 mN·m or less. With the low-temperature torque in this range, energy loss upon starting of such as motors that use a grease composition is small and thus the fuel-saving property of the automobiles having the grease composition becomes excellent. This low-temperature torque can be reduced, for example, by decreasing the viscosity or enhancing the temperature viscosity index of the mixture of the lubricant base oil and the ethylene-$\alpha$-olefin (co)polymer.

Moreover, additives such as extreme pressure agents, detergent dispersants, viscosity index improving agents, antioxidants, corrosion preventing agents, anti-wear agents, friction modifying agents, pour point lowering agents, solid lubricants, anti-rust agents and anti-foamers may be contained in the grease composition of the present invention.

Below are exemplifications of additives which can be utilized in the grease composition of the present invention, where these can be used alone, or used in combination of two or more.

The extreme pressure agent is the generic name for agents having a seizure preventing effect at a high load condition, and although there are no particular limitations on the agent, sulfur-based extreme pressure agents such as sulfides, sulfoxides, sulfones, thiophosphinates, thiocarbonates, sulfurized oils and sulfurized olefins; phosphoric acids such as phosphate esters, phosphite esters, phosphate ester amine salts, and phosphite ester amines; and halogen-based compounds such as chlorinated hydrocarbons can be exemplified. Moreover, two or more types of these compounds may be used together.

Until extreme pressure lubricating conditions are attained, hydrocarbon or other organic components constituting grease composition may become carbonized before reaching extreme pressure lubricating conditions due to heating or shearing, and thus there is a possibility that a carbide film could be formed on a metal surface. Therefore, with the use

of the extreme pressure agent alone, contact of a metal surface with the extreme pressure agent could be inhibited due to the carbide film, and thus a possibility that a sufficient effect of the extreme pressure agent cannot be expected.

Although the extreme pressure agent may be added alone, because a saturated hydrocarbon such as a copolymer constitutes a main component in the grease composition in the present invention, from the perspective of dispersibility, it is preferable to add the agent to the lubricant base oil such as mineral oil or synthetic hydrocarbon oil, together with the other additives to be used, in a dissolved state beforehand. Specifically, more preferable is a method of selecting the so-called extreme pressure agent package to be added to the grease composition, in which the various components such as the extreme pressure agent components are mixed in advance, and further dissolved in the lubricant base oil such as mineral oil or synthetic hydrocarbon oil.

Preferred extreme pressure agents (package) include Anglamol-98A (made by LUBRIZOL), Anglamol-6043, Angramol-6085U (made by LUBRIZOL), HITEC 1532 (made by AFTON CHEMICAL), HITEC 307 (made by AFTON CHEMICAL), HITEC 3339 (made by AFTON CHEMICAL), and Additin RC 9410 (made by RHEIN

CHEMIE).

The extreme pressure agents may be used as required in a range of 0 to 10% by mass, to 100% by mass of the grease composition.

Exemplifications of the anti-wear agent include inorganic or organic molybdenum compounds such as molybdenum disulfide, graphite, antimony sulfide, and polytetrafluoroethylene. The anti-wear agents may be used as required in a range of 0 to 3% by mass with respect to 100% by mass of the grease composition.

Exemplifications of the friction modifying agent include amine compounds, imide compound, fatty acid esters, fatty acid amides, and fatty acid metal salts having at least one alkyl group or alkenyl group having 6 to 30 carbon atoms, particularly linear alkyl groups or linear alkenyl groups having 6 to 30 carbon atoms, in a molecule.

Exemplifications of the amine compound include a linear- or branched-, preferably linear-, aliphatic monoamine, or a linear- or branched-, preferably linear-, aliphatic polyamine having 6 to 30 carbon atoms, or alkylene oxide adducts of these aliphatic amines. Examples of the imide compound include imide succinate with linear- or branched- alkyl group or alkenyl group having 6 to 30 carbon atoms and/or compounds thereof modified by a carboxylic acid, boric acid, phosphoric acid, sulfuric acid etc.

Exemplifications of the fatty acid ester include esters of a linear- or branched-, preferably linear-, fatty acid having 7 to 31 carbon atoms with an aliphatic monohydric alcohol or aliphatic polyhydric alcohol. Exemplifications of the fatty acid amide include amides of a linear- or branched-, preferably linear-, fatty acid having 7 to 31 carbon atoms with an aliphatic monoamine or aliphatic polyamine. Examples of fatty acid metal salts include alkaline-earth metal salts (e.g. magnesium salts and calcium salts) and zinc salts of a linear- or branched-, preferably linear-, fatty acid having 7 to 31 carbon atoms.

The friction modifying agents may be used as required in a range of 0 to 5.0% by mass with respect to 100% by mass of the grease composition.

Exemplifications of the detergent dispersants include metal sulfonates, metal phenates, metal phosphonates, and imide succinate. The detergent dispersants may be used as required in a range of 0 to 15% by mass with respect to 100% by mass of the grease composition.

In addition to ethylene-$\alpha$-olefin copolymers (excluding the ethylene-$\alpha$-olefin copolymer (B)), known viscosity index improving agents such as olefin copolymers whose molecular weights exceed 50,000, methacrylate-based copolymers, poly $\alpha$-olefins such as decene oligomer, and liquid polybutene can be used together as the viscosity index improving agent. The viscosity index improving agents may be used as required in a range of 0 to 80% by mass with respect to 100% by mass of the grease composition.

Examples of the antioxidant include phenol-based or amine-based compounds such as 2,6-di-t-butyl-4-methylphenol. The antioxidants may be used as required in a range of 0 to 3% by mass with respect to 100% by mass of the grease composition.

Examples of the corrosion preventing agent include compounds such as benzotriazole, benzoimidazole, and thiadiazole. The corrosion preventing agent may be used as required in a range of 0 to 3% by mass with respect to 100% by mass of the grease composition.

Examples of the solid lubricants include compounds such as molybdenum disulfide, graphite and melaminecyanurate, and PTFE. The solid lubricant is used in a range of 0 to 3% by mass for 100% by mass of the grease composition as required.

Examples of the anti-rust agent include compounds such as amine compounds, carboxylic acid metal salts, polyhydric alcohol esters, phosphorus compounds, and sulfonates. The anti-rust agent may be used as required in a range of 0 to 3% by mass with respect to 100% by mass of the lubricating oil composition.

Exemplifications of the anti-foamer include silicone-based compounds such as dimethyl siloxane and silica gel dispersions, and alcohol- or ester-based compounds. The anti-foamer may be used as required in a range of 0 to 0.2%

by mass with respect to 100% by mass of the grease composition.

A variety of known pour point lowering agents may be used as the pour point lowering agent. Specifically, high molecular compounds containing an organic acid ester group may be used, and in particular, vinyl polymers containing an organic acid ester group are suitably used. Examples of the vinyl polymers containing an organic acid ester group include (co)polymers of methacrylic acid alkyl, (co)polymers of acrylic acid alkyl, (co)polymers of fumaric acid alkyl, (co)polymers of maleic acid alkyl, and alkylated naphthalene.

Such pour point lowering agents have a melting point of -13°C or lower, preferably -15°C, and furthermore preferably -17°C or lower. The melting point of the pour point lowering agent is measured by means of differential scanning calorimetry (DSC). Specifically, a sample of about 5 mg is packed into an aluminum pan and temperature is raised to 200°C, where the temperature is maintained at 200°C for 5 minutes. This is then cooled at 10°C/minute until reaching - 40°C, where the temperature is maintained at -40°C for 5 minutes. The temperature is then raised at 10°C/minute during which the melting point is obtained from the heat absorption curve.

The pour point lowering agent has a polystyrene conversion weight average molecular weight obtainable by gel permeation chromatography in the range of 20,000 to 400,000, preferably 30,000 to 300,000, more preferably 40,000 to 200,000. The pour point lowering agents is used as required in a range of 0 to 2% by mass with respect to 100% by mass of the grease composition.

In addition to the aforementioned additives, anti-emulsifying agents, coloring agents, oiliness agents (oiliness improving agents) and the like may also be used as required.

< Use >

The grease composition of the present invention can be suitably utilized as the grease for various automobile parts, industrial facilities and machines, and home devices, and has extremely excellent oil-formation properties at high temperatures and low-torque properties at low temperatures with balance. The grease composition in the present invention is extremely useful in especially grease for automobile parts.

Examples

The present invention is further specifically explained based on the below Examples. However, the present invention is not limited to these Examples.

[Evaluation method]

In the below Examples and Comparative Examples etc., physical properties etc. of the ethylene-α-olefin copolymer, the mixture of the lubricant base oil and the ethylene-α-olefin, and the grease composition were measured by the below methods.

< Ethylene content (mol%) >

Using a Fourier transform infrared spectrometer FT/IR-610 or FT/IR-6100 (made by JASCO), the absorbance ratio of the absorption in the vicinity of 721 $cm^{-1}$ based on the horizontal vibration of the long chain methylene group, and the absorption in the vicinity of 1155 $cm^{-1}$ based on the skeletal vibration of propylene (D1155 $cm^{-1}$ / D721 $cm^{-1}$) was calculated, and the ethylene content (% by weight) was obtained by the calibration curve created beforehand (created using the ASTM D3900 reference sample). Using the ethylene content (% by weight) thus obtained, the ethylene content (mol%) was obtained according to the following Formula.

$$\text{Ethylene content (mol\%)} = \frac{[\text{ethylene content (\% by weight)} / 28]}{[\text{ethylene content (\% by weight)} / 28] + [\text{propylene content (\% by weight)} / 42]}$$

< B-value >

Employing o-dichloro benzene / benzene-$d_6$ (4/1 [vol/vol%]) as a measurement solvent, the $^{13}$C-NMR spectrum was measured under the measuring conditions (100 MHz, ECX 400P, made by JEOL Ltd) of temperature of 120°C, spectral width of 250 ppm, pulse repeating time of 5.5 seconds, and a pulse width of 4.7 μsec (45° pulse), or under the measuring conditions (125 MHz, AVANCE III Cryo-500 made by Bruker Biospin Inc) of temperature of 120°C, spectral

width of 250 ppm, pulse repeating time of 5.5 seconds, and a pulse width of 5.0 μsec (45° pulse), and the B-value was calculated based on the following Formula [1].

$$B = \frac{P_{OE}}{2P_O \cdot P_E} \quad \cdots [1]$$

In Formula [1], $P_E$ indicates the molar fraction contained in the ethylene component, $P_O$ indicates the molar fraction contained in the α-olefin component, and $P_{OE}$ indicates the molar fraction of the ethylene-α-olefin sequences of all dyad sequences.

< Molecular weight distribution >

Employing the HLC-8320 GPC (gel permeation chromatography) device produced by Tosoh Corporation, the molecular weight distribution was measured as below. Four TSK gel Super Multipore HZ-M columns were used as separation columns, the column temperature was 40°C, tetrahydrofuran (made by Wako Pure Chemical Industries) was used as the mobile phase, with a development rate of 0.35 ml/minute, a sample concentration of 5.5 g/L, a sample injection amount of 20 microliters, and a differential refractometer was used as a detector. PStQuick MP-M; made by Tosoh Corporation) was used as the reference polystyrene. In accordance with general-purpose calibration procedures, weight average molecular weight (Mw) and number average molecular weight (Mn) were calculated in terms of polystyrene molecular weight, and the molecular weight distribution (Mw/Mn) was calculated from those values.

< Viscosity properties >

The 100°C kinematic viscosity, 40°C kinematic viscosity and the viscosity index were measured and calculated by the method described in JIS K2283.

The physical properties of the grease composition according to the present invention were measured by the following methods.

< Worked penetration >

Worked penetration was calculated from a depth of penetration for five seconds of a circular cone that is attached to a penetrometer and that fell down into a sample at 25°C, in accordance with the grease consistency testing method (ASTM D217).

< Dropping point >

The dropping point was set as the temperature at which the sample dropped for the first time when heating the sample with 1 to 1.5°C/minute of increasing temperature speed in accordance with JIS K2220.

< Evaporation amount >

The evaporation amount was calculated based on the weight change after heating the sample at 99°C for 22 hours in accordance with JIS K2220.

< Oil separation >

The oil separation was calculated by measuring the mass of oil separated from the sample after heating the sample at 100°C for 24 hours in accordance with JIS K2220.

< Low-temperature torque >

The sample was filled into an open bearing defined in JIS B1521 and the starting torque (mN·m) and the rotation torque (mN·m) at -40°C were measured in accordance with the grease low-temperature testing method (JIS K2220-18).

< Thermal and oxidation stability >

In accordance with the grease oxidization stability testing method (JIS K 2220-12), the sample pressurized to

755 kPa by oxygen cylinder was heated to 99°C, and pressure drop (loss of oxidization pressure) (kPa) after 100 hours was measured.

[Production of ethylene-α-olefin copolymer (B)]

Ethylene-α-olefin copolymers (B) were prepared in accordance with the Polymerization Examples below.

[Polymerization Example 1]

710 mL of heptane and 145 g of propylene were charged into a stainless steel autoclave with a volume of 2L sufficiently substituted with nitrogen, and the temperature in the system was raised to 150°C, and then 0.40 MPa of hydrogen and 0.27 MPa of ethylene were supplied to raise the total pressure to 3 MPaG. Then, 0.4 mmol of triisobutyl aluminum, 0.0001 mmol of diphenylmethylene [$\eta^5$-(3-n-butyl cyclopentadienyl)] [$\eta^5$-(2,7-di-tert-butyl fluorenyl)] zirconium dichloride, and 0.001 mmol of N,N-dimethylanilinium tetrakis (pentafluorophenyl) borate were injected with nitrogen, and polymerization was started by stirring with a rotation of 400 rpm. Ethylene only was then continuously supplied to keep the total pressure at 3 MPaG, and polymerization took place at 150°C for 5 minutes. Polymerization was stopped by adding a small amount of ethanol in the system, and the unreacted ethylene, propylene and hydrogen were purged. The resulting polymer solution was washed 3 times with 1000 ml of a 0.2 mol/L solution of hydrochloric acid, further washed 3 times with 1000 ml of distilled water, dried with magnesium sulfate, and the solvent was then distilled off under reduced pressure. The resulting polymer was dried overnight at 80°C under reduced pressure to obtain 52.2 g of an ethylene-propylene copolymer. The resulting polymer had an ethylene content of 52.9 mol%, an Mw of 8,600, an Mw/Mn of 1.8, a B-value of 1.2, and a 100°C kinematic viscosity of 600 $mm^2/s$.

[Polymerization Example 2]

250 mL of heptane was charged into a glass polymerization vessel with a volume of 1 L sufficiently substituted with nitrogen, and the temperature in the system was raised to 50°C, and then 25 L/h of ethylene, 75 L/h of propylene, and 100 L/h of hydrogen were continuously supplied into the polymerization vessel, and stirred with a rotation of 600 rpm. Then, 0.2 mmol of triisobutyl aluminum was charged into the polymerization vessel, and 0.023 mmol of N,N-dimethylanilinium tetrakis (pentafluorophenyl) borate and 0.00230 mmol of diphenylmethylene [$\eta^5$-(3-n-butyl cyclopentadienyl)] [$\eta^5$-(2,7-di-tert-butyl fluorenyl)] zirconium dichloride, which were pre-mixed in toluene for 15 minutes or more, were charged into the polymerization vessel to start the polymerization. Ethylene, propylene and hydrogen were then continuously supplied, and polymerization took place at 50°C for 15 minutes. Polymerization was stopped by adding a small amount of isobutyl alcohol in the system, and the unreacted monomers were purged. The resulting polymer solution was washed 3 times with 100 mL of a 0.2 mol/L solution of hydrochloric acid, further washed 3 times with 100 mL of distilled water, dried with magnesium sulfate, and the solvent was then distilled off under reduced pressure. The resulting polymer was dried overnight at 80°C under reduced pressure to obtain 1.43 g of an ethylene-propylene copolymer. The resulting polymer had an ethylene content of 52.4 mol%, an Mw of 13,600, an Mw/Mn of 1.9, a B-value of 1.2, and a 100°C kinematic viscosity of 2,000 $mm^2/s$.

[Polymerization Example 3]

710 mL of heptane and 145 g of propylene were charged into a stainless steel autoclave with a volume of 2L sufficiently substituted with nitrogen, and the temperature in the system was raised to 150°C, and then 0.40 MPa of hydrogen and 0.27 MPa of ethylene were supplied to raise the total pressure to 3 MPaG. Then, 0.4 mmol of triisobutyl aluminum, 0.0001 mmol of dimethylsilyl bis(indenyl) zirconium dichloride, and 0.029 mmol of MMAO were injected with nitrogen, and polymerization was started by stirring with a rotation of 400 rpm. Ethylene only was then continuously supplied to keep the total pressure at 3 MPaG, and polymerization took place at 150°C for 5 minutes. Polymerization was stopped by adding a small amount of ethanol in the system, and the unreacted ethylene, propylene and hydrogen were purged. The resulting polymer solution was washed 3 times with 1000 ml of a 0.2 mol/L solution of hydrochloric acid, further washed 3 times with 1000 ml of distilled water, dried with magnesium sulfate, and the solvent was then distilled off under reduced pressure. The resulting polymer was dried overnight at 80°C under reduced pressure to obtain 52.2 g of an ethylene-propylene copolymer. The resulting polymer had an ethylene content of 53.3 mol%, an Mw of 8,500, an Mw/Mn of 1.9, a B-value of 1.2, and a 100°C kinematic viscosity of 600 $mm^2/s$.

[Polymerization Example 4]

250 mL of heptane was charged into a glass polymerization vessel with a volume of 1 L sufficiently substituted

with nitrogen, and the temperature in the system was raised to 50°C, and then 25 L/h of ethylene, 75 L/h of propylene, and 100 L/h of hydrogen were continuously supplied into the polymerization vessel, and stirred with a rotation of 600 rpm. Then, 0.2 mmol of triisobutyl aluminum was charged into a polymerization vessel, and 0.688 mmol of MMAO and 0.00230 mmol of dimethylsilyl bis(indenyl) zirconium dichloride, which were pre-mixed in toluene for 15 minutes or more, were charged into a polymerization vessel to start the polymerization. Ethylene, propylene and hydrogen were then continuously supplied, and polymerization took place at 50°C for 15 minutes. Polymerization was stopped by adding a small amount of isobutyl alcohol in the system, and the unreacted monomers were purged. The resulting polymer solution was washed 3 times with 100 mL of a 0.2 mol/L solution of hydrochloric acid, further washed 3 times with 100 mL of distilled water, dried with magnesium sulfate, and the solvent was then distilled off under reduced pressure. The resulting polymer was dried overnight at 80°C under reduced pressure to obtain 1.43 g of an ethylene-propylene copolymer. The resulting polymer had an ethylene content of 52.1 mol%, an Mw of 13,800, an Mw/Mn of 2.0, a B-value of 1.2, and a 100°C kinematic viscosity of 2,000 $mm^2/s$.

The copolymer obtained by Polymerization Example 1, the copolymer obtained by Polymerization Example 2, the copolymer obtained by Polymerization Example 3, and the copolymer obtained by Polymerization Example 4 are respectively described below as Polymer 1, Polymer 2, Polymer 3, and Polymer 4.

[Preparation of grease composition]

Components other than the ethylene-α-olefin copolymer (B) used in the preparation of the following grease composition are as follows.

Lubricant base oil;

The below lubricant base oil was used as the synthetic oil.

Synthetic oil -A: Synthetic oil poly-α-olefin (NEXBASE2006 made by Neste Corporation) having a 100°C kinematic viscosity of 5.8 $mm^2/s$, a 40°C kinematic viscosity of 30.4 $mm^2/s$, a viscosity index of 138 and a pour point of -50°C or lower.

The below thickener was used as the thickener.

Lithium soap: lithium 1,2- hydroxystearate

Antioxidant; phenolic antioxidant (Irganox L135 made by BASF)

< Grease composition >

[Example 1]

Synthetic oil -A was used as the lubricant base oil (A), the copolymer obtained in Polymerization Example 1 (Polymer 1) was used as the ethylene-α-olefin copolymer (B), and lithium soap was used as the thickener (C). These were stirred together with antioxidant under a high temperature such that the sum total of them is 100% by mass to prepare a grease composition. Respective added amounts are as shown in Table 2. The physical properties of the grease composition are shown in Table 2.

Furthermore, a mixture comprising the synthetic oil-A as the lubricant base oil (A) and the Polymer 1 as the ethylene-α-olefin copolymer (B) in the ratio shown in Table 2 (44.8 : 50.0) was prepared, and the kinematic viscosities at 100°C and 40°C, and the viscosity index of this mixture were measured. Results are shown in table 2.

[Example 2 to 4, Comparative Examples 1 to 4]

Except for changing the types of components and addition amounts to those as described in Table 2, the grease compositions were prepared in the same way as in Example 1. The physical properties of the obtained grease composition are as shown in Table 2.

Furthermore, a mixture comprising the synthetic oil -A as the lubricant base oil (A) and the Polymer 1, 2, 3, or 4 as the ethylene-α-olefin copolymer (B) in the ratio shown in Table 2 were prepared, and the kinematic viscosities at 100°C and 40°C, and the viscosity index of this mixture were measured. Results are shown in table 2.

Table 2

| | | Example 1 | Example 2 | Example 3 | Example 4 | Comparative Example 1 | Comparative Example 2 | Comparative Example 3 | Comparative Example 4 |
|---|---|---|---|---|---|---|---|---|---|
| Polymer 1 | % by mass | 50.0 | | 23.0 | | | | | |
| Polymer 2 | % by mass | | 37.0 | | 13.0 | | | | |
| Polymer 3 | % by mass | | | | | 50.0 | | 23.0 | |
| Polymer 4 | % by mass | | | | | | 37.0 | | 13.0 |
| Synthetic oil-A | % by mass | 44.8 | 57.8 | 67.3 | 77.3 | 44.8 | 57.8 | 67.3 | 77.3 |
| Base oil/polymer 40°C kinematic viscosity | $mm^2/s$ | 1000 | 968 | 52 | 51 | 1005 | 978 | 50 | 53 |
| Base oil/polymer 100°C kinematic viscosity | $mm^2/s$ | 100 | 102 | 8.7 | 10.1 | 102 | 105 | 8.6 | 10.8 |
| Base oil/Polymer viscosity index | - | 187 | 200 | 149 | 162 | 187 | 201 | 150 | 161 |
| Thickener | % by mass | 5.0 | 5.0 | 9.5 | 9.5 | 5.0 | 5.0 | 9.5 | 9.5 |
| Antioxidant | % by mass | 0.2 | 0.2 | 0.2 | 0.2 | 0.2 | 0.2 | 0.2 | 0.2 |
| Worked penetration | - | 273 | 273 | 287 | 286 | 275 | 270 | 285 | 288 |
| Dropping point | °C | 204 | 206 | 204 | 211 | 207 | 203 | 208 | 210 |
| Evaporation amount | % | 0.0 | 0.1 | 0.1 | 0.0 | 0.0 | 0.1 | 0.1 | 0.0 |
| Oil separation | % | 1.3 | 1.0 | 6.3 | 6.0 | 1.2 | 1.0 | 6.0 | 5.8 |
| -40°C starting torque | mN·m | 210 | 200 | 100 | 130 | 200 | 220 | 110 | 120 |

(continued)

| | | Example 1 | Example 2 | Example 3 | Example 4 | Comparative Example 1 | Comparative Example 2 | Comparative Example 3 | Comparative Example 4 |
|---|---|---|---|---|---|---|---|---|---|
| -40°C rotation torque | mN·m | 100 | 90 | 48 | 59 | 100 | 100 | 49 | 56 |
| Oxidization pressure loss | kPa | 10 | 10 | 10 | 10 | 80 | 90 | 80 | 70 |

## Claims

1. A grease composition comprising 10 to 98% by mass of lubricant base oil (A) having the properties of the below (A1) to (A3), 89 to 1% by mass of a liquid random copolymer (B) of ethylene and $\alpha$-olefin(s) produced by the method ($\alpha$) below, and 1 to 30% by mass of a thickener (C), wherein the sum total of the lubricant base oil (A), the copolymer (B) and the thickener (C) is 100% by mass, the lubricant base oil (A) and the liquid random copolymer (B) being mixed in such a ratio that the mixture of the lubricant base oil (A) and the liquid random copolymer (B) has the properties of the below (D1) to (D2):

   (A1) The lubricant base oil has a kinematic viscosity at 100°C of 1 to 14 $mm^2/s$.
   (A2) The lubricant base oil has a viscosity index of 100 or more.
   (A3) The lubricant base oil has a pour point of 0°C or lower.
   (D1) The mixture has a kinematic viscosity at 100°C of 1 to 500 $mm^2/s$.
   (D2) The mixture has a viscosity index of 120 or more.
   (Method ($\alpha$))

   A method ($\alpha$) for preparing a liquid random copolymer of ethylene and $\alpha$-olefin, comprising a step of carrying out solution polymerization of ethylene and $\alpha$-olefin having 3 to 20 carbon atoms, under a catalyst system comprising

   (a) a bridged metallocene compound represented by the following Formula, 1 and
   (b) at least one compound selected from a group consisting of

      (i) an organoaluminum oxy-compound, and
      (ii) a compound which reacts with the bridged metallocene compound to form an ion pair.

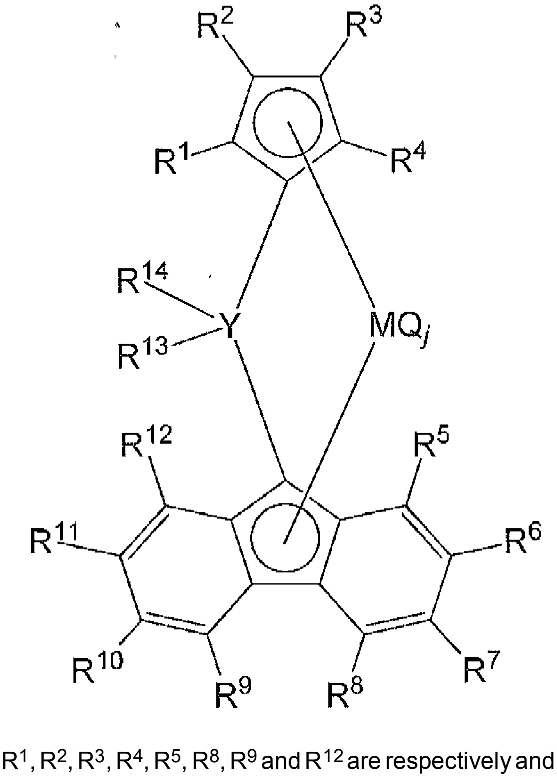

··· (Formula 1)

   [In Formula 1, $R^1$, $R^2$, $R^3$, $R^4$, $R^5$, $R^8$, $R^9$ and $R^{12}$ are respectively and independently hydrogen atom, hydrocarbon group or silicon-containing hydrocarbon group, and adjoining groups are optionally connected to each other to form a ring structure,

      $R^6$ and $R^{11}$, being the same, are hydrogen atom, hydrocarbon group or silicon-containing hydrocarbon group,
      $R^7$ and $R^{10}$, being the same, are hydrogen atom, hydrocarbon group or silicon-containing hydrocarbon group,
      $R^6$ and $R^7$ are optionally connected to hydrocarbon having 2 to 3 carbon atoms to form a ring structure,

$R^{11}$ and $R^{10}$ are optionally connected to hydrocarbon having 2 to 3 carbon atoms to form a ring structure,
$R^6$, $R^7$, $R^{10}$ and $R^{11}$ are not hydrogen atoms at the same time;
Y is a carbon atom or silicon atom;
$R^{13}$ and $R^{14}$ are independently aryl group;
M is Ti, Zr or Hf;
Q is independently halogen, hydrocarbon group, an anionic ligand or a neutral ligand which can be coordinated to a lone pair of electrons; and
j is an integer of 1 to 4.]

2. The grease composition according to Claim 1, wherein in the metallocene compound represented by the above Formula 1, at least one among substituents ($R^1$, $R^2$, $R^3$ and $R^4$) bonded to a cyclopentadienyl group is a hydrocarbon group having 4 or more carbon atoms.

3. The grease composition according to Claim 1 or 2, wherein $R^6$ and $R^{11}$, being the same, are hydrocarbon groups having 1 to 20 carbon atoms.

4. The grease composition according to any one of Claims 1 to 3, wherein in the metallocene compound represented by the above Formula 1, substituent ($R^2$ or $R^3$) bonded to the 3-position of the cyclopentadienyl group is a hydrocarbon group.

5. The grease composition according to Claim 4, wherein in the metallocene compound represented by the above Formula 1, the hydrocarbon group ($R^2$ or $R^3$) bonded to the 3-position of the cyclopentadienyl group is an n-butyl group.

6. The grease composition according to any one of Claims 1 to 5, wherein in the metallocene compound represented by the above Formula 1, substituents ($R^6$ and $R^{11}$) bonded to the 2-position and the 7-position of the fluorenyl group are all tert-butyl groups.

7. The grease composition according to any one of Claim 1 to 6, wherein the compound that reacts with the bridged metallocene compound to form an ion pair is a compound represented by the following Formula 6:

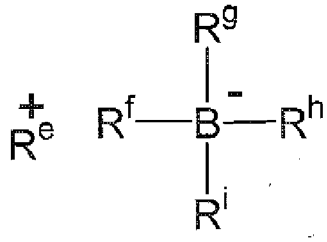

... (Formula 6)

[In Formula 6, $R^{e+}$ is $H^+$, a carbenium cation, an oxonium cation, an ammonium cation, a phosphonium cation, a cycloheptyltrienyl cation, or a ferrocenium cation having a transition metal, and $R^f$ to $R^i$ each is independently a hydrocarbon group having 1 to 20 carbon atoms.]

8. The grease composition according to Claim 7, wherein the ammonium cation is a dimethylanilinium cation.

9. The grease composition according to Claim 7 or 8, wherein the catalyst system further comprises an organoaluminum compound selected from a group consisting of trimethyl aluminum and triisobutyl aluminum.

10. The grease composition according to any one of Claims 1 to 9, wherein the kinematic viscosity at 40°C of the mixture of the lubricant base oil (A) and the liquid random copolymer (B) is 1 to 10, 000 $mm^2/s$.

11. A grease composition comprising 10 to 98% by mass of lubricant base oil (A) having the properties of the below (A1) to (A3), 89 to 1% by mass of a liquid random copolymer of ethylene and $\alpha$-olefin(s) having the properties of the below (B1) to (B5), and 1 to 30% by mass of a thickener (C) (note that the sum total of the lubricant base oil (A), the copolymer and the thickener (C) is 100% by mass), the lubricant base oil (A) and the liquid random copolymer being mixed in such a ratio that the mixture of the lubricant base oil (A) and the liquid random copolymer has the properties of the below (D1) to (D2):

(A1) The lubricant base oil has a kinematic viscosity at 100°C of 1 to 14 $mm^2/s$.
(A2) The lubricant base oil has a viscosity index of 100 or more.
(A3) The lubricant base oil has a pour point of 0°C or lower.
(B1) The liquid random copolymer comprises 40 to 60 mol% of ethylene units and 60 to 40 mol% of α-olefin units having 3 to 20 carbon atoms.
(B2) The liquid random copolymer has the number average molecular weight (Mn) of 500 to 10,000 and the molecular weight distribution of 3 or less (Mw/Mn, Mw is the weight average of the molecular weight) measured by Gel Permeation Chromatography (GPC).
(B3) The liquid random copolymer has a kinematic viscosity at 100°C of 30 to 5,000 $mm^2/s$.
(B4) The liquid random copolymer has a pour point of 30 to - 45°C.
(B5) The liquid random copolymer has the Bromine Number of 0.1g / 100g or less.
(D1) The mixture has a kinematic viscosity at 100°C of 1 to 500 $mm^2/s$.
(D2) The mixture has a viscosity index of 120 or more.

**12.** The grease composition according to any one of Claims 1 to 11, wherein the lubricant base oil (A) further has the properties of the below (A4) to (A6):

(A4) The lubricating-oil base oil has a kinematic viscosity at 100°C of 1 to 10 $mm^2/s$.
(A5) The lubricating-oil base oil has a viscosity index of 105 or more.
(A6) The lubricating-oil base oil has a pour point of -10°C or lower.

**13.** The grease composition according to any one of Claims 1 to 12, wherein 30 to 100% by mass of the lubricant base oil (A) is synthetic oil, and the synthetic oil is poly-α-olefin (PAO) and/or ester oil having a viscosity index of 120 or more.

**14.** A grease for automobile parts consisting of the grease composition according to any one of Claims 1 to 13.

**15.** A method for producing a grease composition, comprising the steps of:

preparing a liquid random copolymer (B) of ethylene and α-olefin by the following method (α), and
preparing a grease composition by mixing 10 to 98% by mass of a lubricant base oil (A) having properties of the below (A1) to (A3) in the grease composition, 89 to 1% by mass of the liquid random copolymer (B) in the grease composition, and 1 to 30% by mass of a thickener (C) in the grease composition (note that the sum total of the lubricant base oil (A), the copolymer (B) and the thickener (C) is 100% by mass), in which the lubricant base oil (A) and the liquid random copolymer (B) are mixed in such a ratio that the mixture of the lubricant base oil (A) and the liquid random copolymer (B) has properties of the below (D1) to (D2):

(A1) The lubricant base oil has a kinematic viscosity at 100°C of 1 to 14 $mm^2/s$.
(A2) The lubricant base oil has a viscosity index of 100 or more.
(A3) The lubricant base oil has a pour point of 0°C or lower.
(D1) The mixture has a kinematic viscosity at 100°C of 1 to 500 $mm^2/s$.
(D2) The mixture has a viscosity index of 120 or more.
(Method (α))

A method (α) for preparing a liquid random copolymer of ethylene and α-olefin, comprising a step of carrying out solution polymerization of ethylene and α-olefin having 3 to 20 carbon atoms, under a catalyst system comprising

(a) a bridged metallocene compound represented by the following Formula, 1 and
(b) at least one compound selected from a group consisting of

(i) an organoaluminum oxy-compound, and
(ii) a compound which reacts with the bridged metallocene compound to form an ion pair.

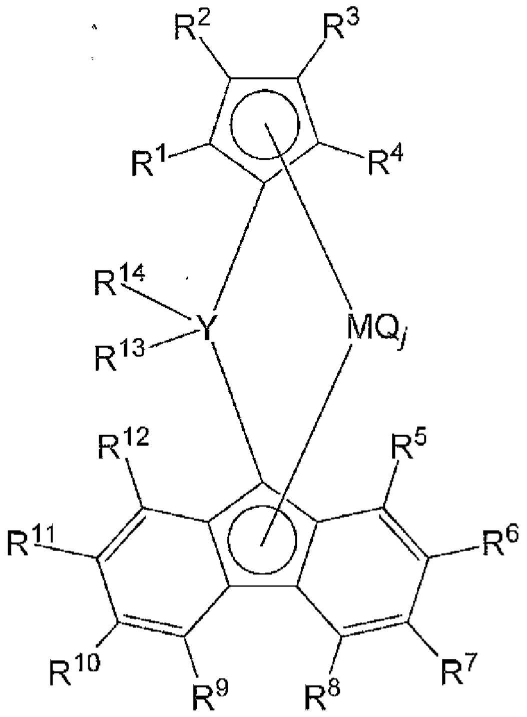

... (Formula 1)

[In Formula 1, $R^1$, $R^2$, $R^3$, $R^4$, $R^5$, $R^8$, $R^9$ and $R^{12}$ are respectively and independently hydrogen atom, hydrocarbon group or silicon-containing hydrocarbon group, and adjoining groups are optionally connected to each other to form a ring structure,

$R^6$ and $R^{11}$, being the same, are hydrogen atom, hydrocarbon group or silicon-containing hydrocarbon group,
$R^7$ and $R^{10}$, being the same, are hydrogen atom, hydrocarbon group or silicon-containing hydrocarbon group,
$R^6$ and $R^7$ are optionally connected to hydrocarbon having 2 to 3 carbon atoms to form a ring structure,
$R^{11}$ and $R^{10}$ are optionally connected to hydrocarbon having 2 to 3 carbon atoms to form a ring structure,
$R^6$, $R^7$, $R^{10}$ and $R^{11}$ are not hydrogen atoms at the same time;
Y is a carbon atom or silicon atom;
$R^{13}$ and $R^{14}$ are independently aryl group;
M is Ti, Zr or Hf;
Q is independently halogen, hydrocarbon group, an anionic ligand or a neutral ligand which can be coordinated to a lone pair of electrons; and
j is an integer of 1 to 4.]

# INTERNATIONAL SEARCH REPORT

International application No.
PCT/JP2019/013005

A. CLASSIFICATION OF SUBJECT MATTER
Int. Cl. C10M107/02(2006.01)i, C08F4/6592(2006.01)i, C10N50/10(2006.01)n

According to International Patent Classification (IPC) or to both national classification and IPC

B. FIELDS SEARCHED
Minimum documentation searched (classification system followed by classification symbols)
Int. Cl. C10M101/00-177/00, C08F4/6592

Documentation searched other than minimum documentation to the extent that such documents are included in the fields searched
Published examined utility model applications of Japan 1922-1996
Published unexamined utility model applications of Japan 1971-2019
Registered utility model specifications of Japan 1996-2019
Published registered utility model applications of Japan 1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2016-69409 A (MITSUI CHEMICALS, INC.) 09 May 2016, claims, paragraphs [0037]-[0039], [0050]-[0072], [0193]-[0196], tables examples 1, 2 (Family: none) | 1-14<br>1-15 |
| Y | WO 2015/147215 A1 (MITSUI CHEMICALS, INC.) 01 October 2015, claims, paragraphs [0157], [0196], example 8, tables 3-5, blending examples 3, 5, 7 & EP 3124505 A1, claims, paragraphs [0120], [0161], example 8, tables 3-5, blending examples 3, 5, 7 & US 2018/0273662 A1 & US 2017/0114166 A1 & KR 10-2016-0121566 A & CN 106133006 A | 1-15 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20.06.2019 | 02.07.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H01308497 A
- JP 2002249794 A
- JP 2005054156 A
- JP 2016069409 A
- EP 2921509 A1
- EP 0776959 A
- EP 0668342 A
- WO 9721788 A
- WO 0015736 A
- WO 0014188 A
- WO 0014187 A
- WO 0014183 A
- WO 0014179 A
- WO 0008115 A
- WO 9941332 A
- EP 1029029 A
- WO 0118156 A
- WO 0157166 A
- US 3780128 A
- US 4032591 A
- JP H01163136 A
- US 3909432 A
- US 4960878 A
- US 5041584 A
- KR 10551147 A
- JP H01501950 A
- JP H03179005 A
- JP H03179006 A
- JP H03207703 A
- JP H03207704 A
- US 5321106 A
- JP 2004051676 A


### Non-patent literature cited in the description


- **APPENDIX E.** API Publication. April 2002, 1509
- Tosoh Research & Technology Review. Tosoh Finechem Corporation, 2003, vol. 47, 55